(19) Europäisches Patentamt
European Patent Office
Office européen des brevets

(11) **EP 4 708 850 A1**

(12) **EUROPEAN PATENT APPLICATION**

(43) Date of publication:
**11.03.2026 Bulletin 2026/11**

(21) Application number: **24315414.3**

(22) Date of filing: **10.09.2024**

(51) International Patent Classification (IPC):
*H04N 19/105* (2014.01)   *H04N 19/11* (2014.01)
*H04N 19/176* (2014.01)   *H04N 19/523* (2014.01)
*H04N 19/593* (2014.01)   *H04N 19/573* (2014.01)
*H04N 19/577* (2014.01)

(52) Cooperative Patent Classification (CPC):
**H04N 19/105; H04N 19/11; H04N 19/176;
H04N 19/523; H04N 19/573; H04N 19/577;
H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.**
**Beijing 100085 (CN)**

(72) Inventors:
• **Ghaznavi Youvalari, Ramin**
  **Beijing, 100085 (CN)**
• **Abdoli, Mohsen**
  **Beijing, 100085 (CN)**
• **Tissier, Alexandre**
  **Beijing, 100085 (CN)**

(74) Representative: **Zimmermann, Tankred Klaus et al**
  **Schoppe, Zimmermann, Stöckeler
  Zinkler, Schenk & Partner mbB
  Patentanwälte
  Radlkoferstrasse 2
  81373 München (DE)**

(54) **METHOD AND APPARATUS FOR OBTAINING ONE OR MORE INTRA PREDICTION MODES (IPMS)**

(57)    A method of processing one or more blocks of a picture obtains one or more intra prediction modes, IPMs, using one or more integer-pel location samples of one or more fractional-pel vectors that are used for a motion compensated prediction of the block.

obtaining one or more intra prediction modes, IPMs, using one or more integer-pel location samples of one or more fractional-pel vectors that are used for a motion compensated prediction of the block — S200

Fig. 18

EP 4 708 850 A1

**Description**

**Technical Field**

The present disclosure generally relates to the field of encoding/decoding pictures, images or videos, and embodiments of the present disclosure concern improvements regarding a prediction. More specific embodiments of the present disclosure relate to obtaining one or more intra prediction modes (IPMs) using integer-pel location sample(s) of fractional-pel vector(s) used for a motion compensated prediction, and that may be used in one or more aspects or tools of a codec, e.g., for a transform selection for certain modes.

**Background**

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding of a picture, a intra prediction mode (IPM) may be used, e.g., for a combined inter and intra prediction (CIIP) prediction or for a transform selection for certain modes.

Thus, there is a need to provide further improvements for obtaining IPM(s) that may be applied for encoding and decoding of a picture, an image or a video.

**Summary**

The present disclosure provides a method of processing one or more blocks of a picture, the method comprising: obtaining one or more intra prediction modes, IPMs, using one or more integer-pel location samples of one or more fractional-pel vectors that are used for a motion compensated prediction of the block.

Optionally, processing the one or more blocks comprises a motion compensation using the one or more fractional-pel vectors, and wherein obtaining the one or more IPMs and the motion compensation are executed in parallel.

Optionally,

the motion compensated prediction of the block is obtained using one or more motion compensated predictions from one or more reference picture areas, and the one or more IPMs are obtained using one or more of the integer-pel location samples of one, some or all of the motion compensated predictions, and
wherein the one or more reference picture areas may comprise:

- one or more reference frames of a current frame, the current frame including the block currently processed, or
- a current frame including the block currently processed.

Optionally, the motion compensated prediction of the block is obtained using two or more motion compensated predictions, and the one or more IPMs are obtained using one or more of the integer-pel location samples of one or some or all of the motion compensated predictions.

Optionally, the integer-pel location samples of the two or more motion compensated predictions to be used are determined

explicitly, e.g., in a data stream, e.g., a bitstream which includes data representing the picture, or
implicitly, e.g., based on one or more of the following:

- motion information of each motion compensated prediction,
- a temporal distance or quality or type of the one or more reference picture areas used for motion compensation.

Optionally, obtaining one or more IPMs uses weights associated with the respective motion compensated predictions, e.g.,

when using a decoder side intra mode derivation, DIMD, like texture analysis mechanism, gradient values of the DIMD process for samples obtained for each integer-pel location are weighted according to blending weights of corresponding motion compensated predictions, or
when using a template-based intra mode derivation, TIMD, like mechanism, and distortion values of the TIMD process for samples obtained for each integer-pel location are weighted according to blending weights of corresponding motion compensated predictions.

Optionally, obtaining the one or more IPMs uses only integer-pel samples from the motion compensated prediction with the highest blending weight.

Optionally, the method comprises:

- obtaining a vector for the motion compensated prediction of the block,
- determining whether the vector is a fractional-pel vector or an integer-pel vector,
- if the vector is a fractional-pel vector, performing in parallel a fractional-pel motion compensation and an IPM derivation for obtaining the one or more IPMs, wherein the IPM derivation uses the one or more integer-pel location samples of the fractional-pel vector, and
- reconstructing the block using the fractional-pel motion compensation and the obtained IPMs.

Optionally, the method comprises:

- obtaining two or more vectors for the motion compensated prediction of the block,
- determining whether the two or more vectors are fractional-pel vectors or integer-pel vectors,
- if the two or more vectors are fractional-pel vectors, performing in parallel respective fractional-pel motion compensations for obtaining a combined motion compensated prediction and an IPM derivation for obtaining the one or more IPMs, wherein the IPM derivation uses the one or more integer-pel location samples of the two or more fractional-pel vectors, and
- reconstructing the block using the combined motion compensated prediction and the obtained IPMs.

Optionally, using the one or more integer-pel location samples of the one or more fractional-pel vectors for obtaining the one or more IPMs is decided

explicitly, e.g., responsive to a signaling in a data stream, e.g., a bitstream which includes data representing the picture, or implicitly, e.g., based on one or more certain criteria, like one or more of the following:

- a prediction mode of the block,
- a motion vector precision of the block,
- a block vector precision of the block,
- a block size.

Optionally, the method comprises performing one or more of the following using the one or more obtained IPMs:

- a transform selection of the current block,
- a combined intra and inter prediction, CIIP, process,
- a coding of blocks other than current block, e.g., one or more future blocks.

Optionally,

the one or more blocks comprise one or more inter-coded blocks, and the one or more vectors comprise one or more motion vectors, or
the one or more blocks comprise one or more non-inter-coded blocks, like one or more Intra block copy, IBC, coded blocks or one or more intra template matching prediction, intraTMP, coded blocks, and the one or more vectors comprise one or more block vectors.

The present disclosure provides a non-transitory computer-readable storage medium comprising instructions which, when executed by a computer, cause the computer to carry out the inventive method.

The present disclosure provides an apparatus of processing one or more blocks of a picture, the apparatus comprising:

an intra prediction mode, IPM, determination module configured to obtain one or more intra prediction modes, IPMs, using one or more integer-pel location samples of one or more fractional-pel vectors that are used for a motion compensated prediction of the block.

The present disclosure provides a data stream having encoded thereinto a picture, wherein the data stream comprises:

an indication of integer-pel location samples of one or more fractional-pel vectors of two or more motion compensated predictions to be used for obtaining one or more intra prediction modes, IPMs, and/or

a flag, the flag indicating whether one or more integer-pel location samples of one or more fractional-pel vectors are to be used for obtaining one or more intra prediction modes, IPMs.

The technical solutions provided according to embodiments of the present disclosure have the following beneficial effects.

In prior art approaches, an intra prediction may be derived from the inter prediction samples. However, such an intra prediction mode derivation from a prediction in inter blocks introduces a latency into the coding process for a given block, e.g., into a decoding or encoding pipeline. The latency is due to a motion compensation process and an intra mode derivation process being executed sequentially as the intra mode derivation requires the motion compensated samples to be ready.

Embodiments of the present disclosure addresses the above drawbacks by providing an approach for obtaining the IPM(s) using prediction samples which are obtained from integer-pel motion vectors or block vectors instead of interpolated samples after the fractional-pel motion compensation process. In accordance with embodiments, the IPM(s) are obtained using one or more integer-pel location samples of one or more fractional-pel vectors that are used for a motion compensated prediction of the block. The inventive approach reduces the latency related to the intra prediction mode (IPM) derivation in inter-coded blocks and in non-intra coded blocks, such as inter, IBC and intraTMP, because it uses the prediction samples which are obtained from an integer-pel motion vectors or block vectors instead of interpolated samples after the fractional-pel motion compensation process in order to derive the intra prediction modes. Thereby, the fractional-pel motion compensation and intra mode derivation for a block can be executed in parallel without introducing additional latency when coding, e.g., without introducing additional latency in a (de)coding pipeline of the block.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

Fig. 1      is a block diagram of a conventional video encoder;
Fig. 2      is a block diagram of a conventional video decoder;
Fig. 3      illustrates template-based intra mode derivation (TIMD) templates for a cost calculation;
Fig. 4      illustrates an intra template matching search area for the Intra template matching prediction (IntraTMP) mode;
Fig. 5      illustrates a combined inter and intra prediction (CIIP) prediction;
Fig. 6      illustrates top and left neighboring blocks used in CIIP weight derivation;
Fig. 7      illustrates a Low-Frequency Non-Separable Transform (LFNST) process;
Fig. 8(A)   illustrates a Region-Of-Interest (ROI) of a CU for a transform LFNST16;
Fig. 8(B)   illustrates a Region-Of-Interest (ROI) of a CU for a transform LFNST8;
Fig. 9      illustrates a table showing the mapping of intra prediction modes to the LFNST set index;
Fig. 10    illustrates an overview of proposed non-separable primary transforms (NSPTs) among existing LFNSTs.
Fig. 11    illustrates a context modeling for LFNST/NSPT coefficients;
Fig. 12    illustrates the use of MIP prediction samples to build a histogram of gradients (HoG);
Fig. 13    illustrates a conventional intra mode derivation for a transform selection in inter blocks;
Fig. 14    illustrates an example of a uni-prediction motion compensation from one reference frame;
Fig. 15    illustrates an example of a bi-prediction motion compensation from two reference frames;
Fig. 16    illustrates an example of a uni-prediction motion compensation in IBC from a current frame;
Fig. 17    illustrates an example of a bi-prediction motion compensation in IBC from a current frame;
Fig. 18    illustrates a flow diagram of a method of obtaining one or more intra prediction modes (IPMs) in accordance with embodiments of the present disclosure;
Fig. 19    illustrates an example of fractional-pel and integer-pel location samples in a reference frame;
Fig. 20    illustrates a reference frame with an example of the integer-pel samples used for an IPM derivation and of fractional-pel samples (motion compensated samples) of an $8 \times 4$ block size;
Fig. 21    illustrates executing an IPM derivation and a uni-predicted motion compensation in parallel in accordance with an embodiment of the present disclosure;
Fig. 22    illustrates executing an IPM derivation and a bi-predicted motion compensation in parallel in accordance with an embodiment of the present disclosure;

Fig. 23    illustrates a flow diagram of a method for decoding an encoded data stream in accordance with embodiments of the present disclosure;

Fig. 24    illustrates a flow diagram of a method for encoding a picture into an encoded data stream in accordance with embodiments of the present disclosure;

Fig. 25    illustrates a block diagram of an apparatus of predicting one or more blocks of a picture in accordance with embodiments of the present disclosure;

Fig. 26    illustrates a block diagram of a decoder for decoding an encoded data stream in accordance with embodiments of the present disclosure;

Fig. 27    illustrates a block diagram of an encoder for encoding a picture into an encoded data stream in accordance with embodiments of the present disclosure;

Fig. 28    illustrates a data stream in accordance with embodiments of the present disclosure; and

Fig. 29    illustrates a block diagram illustrating an electronic device according to embodiments of the present disclosure.

**Detailed Description**

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

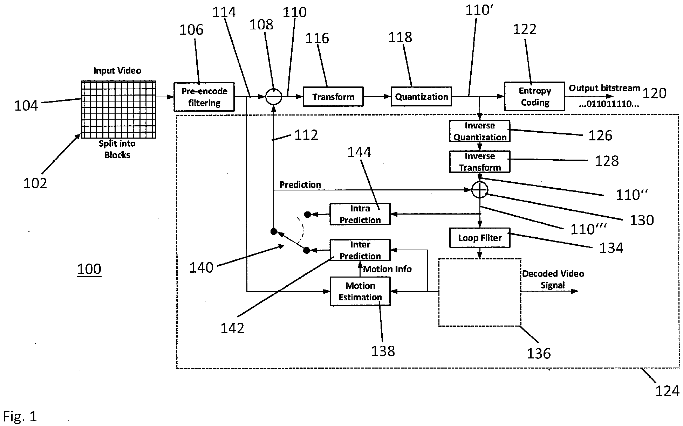

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110'" that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110"'. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

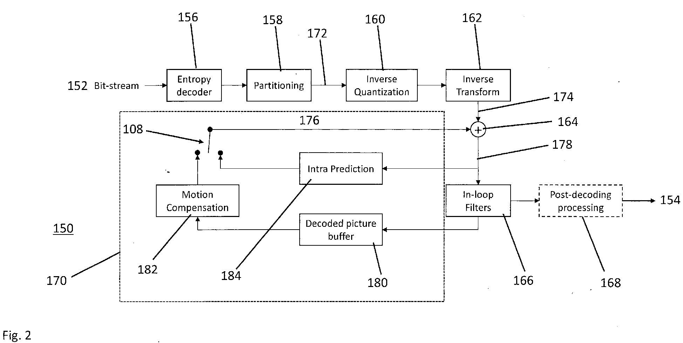

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Description of relevant tools in Enhanced Compression Model (ECM)

A brief description of relevant ECM tools is provided here. More information may be obtained from the JVET-AG2025 and JVET-T2002 documents.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination

$$Orient = G_y/G_x$$

is obtained, e.g., computed by the following LUT-based scheme:

$$x = \text{Floor}(\ \text{Log2}(\ Gx\ )\ )$$

$$\text{normDiff} = (\ (\ Gx << 4\ ) >> x\ )\ \&\ 15$$

$$x += (\ 3 + (\ \text{normDiff}\ !=\ 0\ )\ ?\ 1 : 0\ )$$

$$\text{Orient} = (Gy * (\ \text{DivSigTable}[\ \text{normDiff}\ ]\ |\ 8\ ) + (\ 1 << (\ x\text{-}1\ )\ ))) >> x$$

where

$$\text{DivSigTable}[16] = \{\ 0, 7, 6, 5, 5, 4, 4, 3, 3, 2, 2, 1, 1, 1, 1, 0\ \}.$$

For a block of size $W \times H$, the weight for each of the five derived modes is modified if one of the above or left histogram magnitudes is twice larger than the other one. In this case, the weights are location dependent and computed as follows:

If the above histogram is twice the left, then:

$$w_i(x,y) = wDimd_i + \Delta_i - 2\Delta_i \frac{y}{(H-1)}.$$

If the left histogram is twice the above, then:

$$w_i(x,y) = wDimd_i + \Delta_i - 2\Delta_i \frac{x}{(W-1)},$$

where $wDimd_i$ is the unmodified uniform weight of the DIMD selected as in JVET-O0449, $\Delta_i$ is pre-defined and set to 10.

The derived intra modes are included into a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Fusion for template-based intra mode derivation (TIMD)*

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:

-   The non-angular intra prediction mode is different from the two selected intra prediction modes.
-   costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost:

$$weight_i = \frac{sumSATD - costMode_i}{2 \times sumSATD}, \quad sumSATD = \sum_{j=1}^{3} costMode_i.$$

Otherwise, the non-angular intra prediction mode is not used in the prediction.

The costs of the two selected modes are compared with a threshold, and the cost factor of 2 may be applied as follows:

$$costMode2 < 2*costMode1.$$

If this condition is true, the fusion is applied, otherwise the only model is used.

The weights of the modes are computed from their SATD costs as follows:

$$weight1 = costMode2 / (costMode1 + costMode2)$$

$$weight2 = 1 - weight1$$

The division operations are conducted using the same lookup table (LUT) based integerization scheme used by the CCLM.

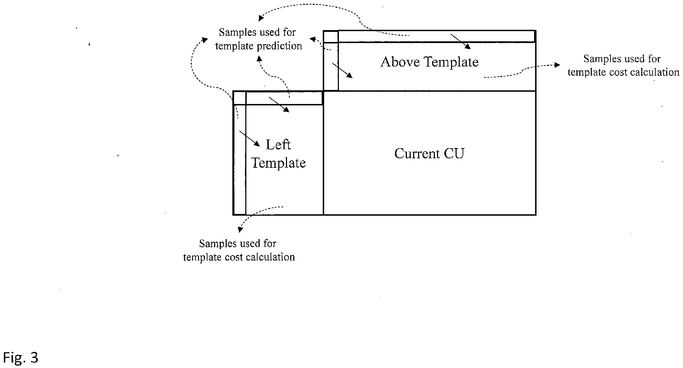

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 3 illustrating the TIMD templates for the cost determination or calculation

*Intra template matching prediction (IntraTMP)*

Intra template matching prediction (IntraTMP) is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

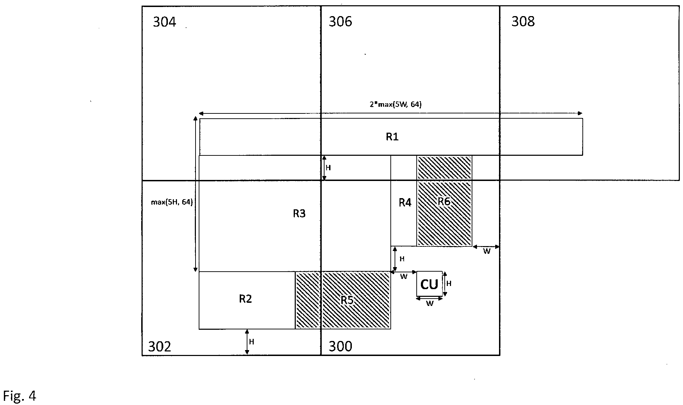

The prediction signal is generated by matching the L-shaped, Top-only or Left-Only causal neighbor of the current block with another block in a predefined search area illustrated in Fig. 4. There are 6 predefined search areas, i.e., R1 to R6 in Fig. 4 which contain the reconstructed samples from the top CTUs 304 to 308 and the left CTU 302 as well as part of the reconstructed samples within the current CTU 300 that are located above, left, bottom-left and top-right to the current block CU.

IntraTMP employs an implicit merge mode, where merge candidates are considered without signaling a merge flag or index. Specifically, the reference positions pointed by the block vectors of all the adjacent and non-adjacent merge candidates (coded in IntraTMP or IBC mode) are used as additional candidates beyond the default search areas. The same template matching cost is used to compare the merge positions and the defaults ones. For bi-directional IBC merge candidate, two candidates are retained corresponding to each reference frame. Similarly, for IntraTMP, two candidates are considered corresponding to the best candidate by template search and the coded candidate.

The sum of absolute differences (SAD) is used as a cost function.

A given search order of the 6 regions is utilized, e.g., R4, R5, R6, R1, R2, and R3. Within each region, the decoder constructs a candidate list of up to "19" template matching block vectors that are ranked in ascending order according to the template cost (SAD). The following modes are supported:

1- Single predictor: A single predictor is selected from the candidate list.

2- Fusion of multiple predictors: multiple predictors are blended multiple to derive the final prediction block. The blending weights are either computed from the template matching cost of each predictor, or with Wiener-filter based weight derivation method.

3- Sub-pel precision: When a single predictor is used, sub-pel precision can be used with 1/2-pel precision, 1/4-pel precision and 3/4-pel precision, each with 8 possible directions.

4- Linear filter model: A linear filter can be learned between the reference template and current template and be applied the linear model to reference block. This mode can be used for single predictor when sub-pel precision is not used.

Additionally, IntraTMP with local illumination compensation is allowed. The following considerations are taken:

1- Usages of LIC and FLM (CCCM-like filtering) are mutually exclusive for a given CU.
2- Usages of LIC together with fusion in intra TMP is allowed.
3- Top-only and Left-only template usage for LIC model determination is allowed for screen content coding. For camera-captured coding, only the top-left template is employed.
4- Multi Mode Linear Model (MMLM) is supported similarly to IBC-LIC, for screen content coding.

When LIC is used for a given CU, the Intra TMP search process employs MRSAD rather than SAD distortion function.

The dimensions of all regions (SearchRange_w, SearchRange_h) are set proportional to the block dimension (BlkW, BlkH) to have a fixed number of SAD comparisons per pixel. That is:

$$SearchRange\_w = \min(64, a * BlkW)$$

$$SearchRange\_h = \min(64, a * BlkH)$$

where 'a' is a constant that controls the gain/complexity trade-off. In practice, 'a' may be equal to 5.

To speed-up the template matching process, the search range of all search regions is subsampled by a factor of 4. After finding the best match, a refinement process is performed. The refinement is done via a second template matching search around the best match with a reduced range.

The Intra template matching tool is enabled for CUs with a size less than or equal to 64 in width and height. This maximum CU size for Intra template matching is configurable.

The Intra template matching prediction mode is signaled at CU level through a dedicated flag when decoder-side intra mode derivation (DIMD) is not used for the current CU.

*Intra block copy (IBC)*

Intra block copy (IBC) is a tool adopted in HEVC extensions on SCC (Screen Content Coding Extension). IBC significantly improves the coding efficiency of screen content materials. Since the IBC mode is implemented as a block level coding mode, block matching (BM) is performed at the encoder to find the optimal block vector (or motion vector) for each CU. Here, a block vector is used to indicate the displacement from the current block to a reference block, which is already reconstructed inside the current picture. When combined with AMVR (Adaptive Motion. Vector Resolution), the IBC mode can switch between 1-pel and 4-pel motion vector precisions. An IBC-coded CU is treated as the third prediction mode other than intra or inter prediction modes. The IBC mode is applicable to the CUs with both width and height smaller than or equal to 64 luma samples.

At the encoder side, hash-based motion estimation is performed for IBC. The encoder performs RD (rate-distortion) check for blocks with either width or height no larger than 16 luma samples. For non-merge mode, the block vector search is performed using hash-based search first. If hash search does not return valid candidate, block matching based local search is performed.

In the hash-based search, hash key matching (32-bit CRC) between the current block and a reference block is extended to all allowed block sizes. The hash key calculation for every position in the current picture is based on 4x4 subblocks. For the current block of a larger size, a hash key is determined to match that of the reference block when all the hash keys of all 4×4 subblocks match the hash keys in the corresponding reference locations. If hash keys of multiple reference blocks are found to match that of the current block, the block vector costs of each matched reference are obtained and the one with the minimum cost is selected.

In block matching search, the search range is set to cover both the previous and current CTUs.

At CU level, IBC mode is signaled with a flag and it can be signaled as IBC AMVP (Advanced Motion Vector Prediction) mode or IBC skip/merge mode as follows:

- IBC skip/merge mode: a merge candidate index is used to indicate which of the block vectors in the list from neighboring candidate IBC coded blocks is used to predict the current block. The merge list consists of spatial, HMVP, and pairwise candidates.
- IBC AMVP mode: a block vector difference is coded in the same way as a motion vector difference. The block vector prediction method uses two candidates as predictors, one from left neighbor and one from above neighbor (if IBC coded). When either neighbor is not available, a default block vector is used as a predictor. A flag is signaled to indicate the block vector predictor index.

*Adaptive motion vector resolution (AMVR)*

In HEVC, motion vector differences (MVDs) between the motion vector and predicted motion vector of a CU are signalled in units of quarter-luma-samples when the use_integer_mv_flag is equal to 0 in the slice header. In VVC, a CU-level adaptive motion vector resolution (AMVR) scheme is introduced. AMVR allows MVD of the CU to be coded in different precision. Dependent on the mode (normal AMVP mode or affine AVMP mode) for the current CU, the MVDs of the current CU can be adaptively selected as follows:

- Normal AMVP mode: quarter-luma-sample, half-luma-sample, integer-luma-sample or four-luma-sample.
- Affine AMVP mode: quarter-luma-sample, integer-luma-sample or 1/16 luma-sample.

The CU-level MVD resolution indication is conditionally signaled if the current CU has at least one non-zero MVD component. If all MVD components (that is, both horizontal and vertical MVDs for reference list L0 and reference list L1) are zero, quarter-luma-sample MVD resolution is inferred.

For a CU that has at least one non-zero MVD component, a first flag is signaled to indicate whether quarter-luma-sample MVD precision is used for the CU. If the first flag is 0, no further signaling is needed and quarter-luma-sample MVD precision is used for the current CU. Otherwise, a second flag is signaled to indicate half-luma-sample or other MVD precisions (integer or four-luma sample) is used for normal AMVP CU. In the case of half-luma-sample, a 6-tap interpolation filter instead of the default 8-tap interpolation filter is used for the half-luma sample position. Otherwise, a third flag is signaled to indicate whether integer-luma-sample or four-luma-sample MVD precision is used for normal AMVP CU. In the case of affine AMVP CU, the second flag is used to indicate whether integer-luma-sample or 1/16 luma-sample MVD precision is used. In order to ensure the reconstructed MV has the intended precision (quarter-luma-sample, half-luma-sample, integer-luma-sample or four-luma-sample), the motion vector predictors for the CU will be rounded to the same precision as that of the MVD before being added together with the MVD. The motion vector predictors are rounded toward zero (that is, a negative motion vector predictor is rounded toward positive infinity, and a positive motion vector predictor is rounded toward negative infinity).

The encoder determines the motion vector resolution for the current CU using RD check. To avoid always performing CU-level RD check four times for each MVD resolution, in VTM11, the RD check of MVD precisions other than quarter-luma-sample is only invoked conditionally. For normal AVMP mode, the RD cost of quarter-luma-sample MVD precision and integer-luma sample MV precision is computed first. Then, the RD cost of integer-luma-sample MVD precision is compared to that of quarter-luma-sample MVD precision to decide whether it is necessary to further check the RD cost of four-luma-sample MVD precision. When the RD cost for quarter-luma-sample MVD precision is much smaller than that of the integer-luma-sample MVD precision, the RD check of four-luma-sample MVD precision is skipped. Then, the check of half-luma-sample MVD precision is skipped if the RD cost of integer-luma-sample MVD precision is significantly larger than the best RD cost of previously tested MVD precisions. For affine AMVP mode, if affine inter mode is not selected after checking rate-distortion costs of affine merge/skip mode, merge/skip mode, quarter-luma-sample MVD precision normal AMVP mode and quarter-luma-sample MVD precision affine AMVP mode, then 1/16 luma-sample MV precision and 1-pel MV precision affine inter modes are not checked. Furthermore, affine parameters obtained in quarter-luma-sample MV precision affine inter mode is used as starting search point in 1/16 luma-sample and quarter-luma-sample MV precision affine inter modes.

*Motion field storage*

In VVC, the highest precision of explicitly signaled motion vectors is quarter-luma-sample. In some inter prediction modes such as the affine mode, motion vectors are derived at 1/16th-luma-sample precision and motion compensated prediction is performed at 1/16th-sample-precision. In terms of internal motion field storage, all motion vectors are stored at 1/16th-luma-sample precision.

For temporal motion field storage used by TMVP and SbTVMP, motion field compression is performed at 8x8 size granularity in contrast to the 16x16 size granularity in HEVC.

*Combined inter and intra prediction (CIIP)*

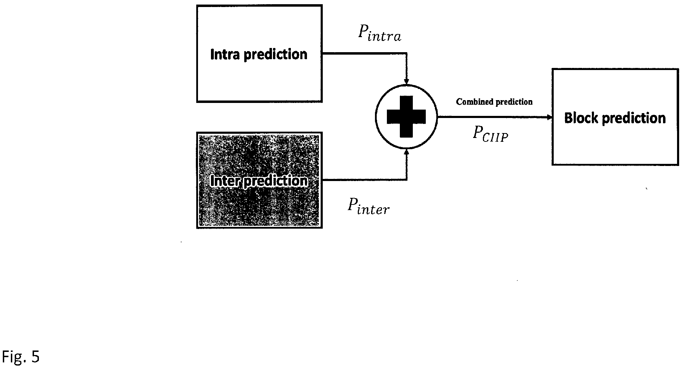

In VVC, when a CU is coded in merge mode, if the CU contains at least 64 luma samples (that is, CU width times CU height is equal to or larger than 64), and if both CU width and CU height are less than 128 luma samples, an additional flag is signaled to indicate if a combined inter/intra prediction (CIIP) mode is applied to the current CU. As its name indicates, the CIIP prediction combines an inter prediction signal with an intra prediction signal, as is illustrated in Fig. 5. The inter prediction signal in the CIIP mode $P_{inter}$ is derived using the same inter prediction process applied to regular merge mode; and the intra prediction signal $P_{intra}$ is derived following the regular intra prediction process with the planar mode.

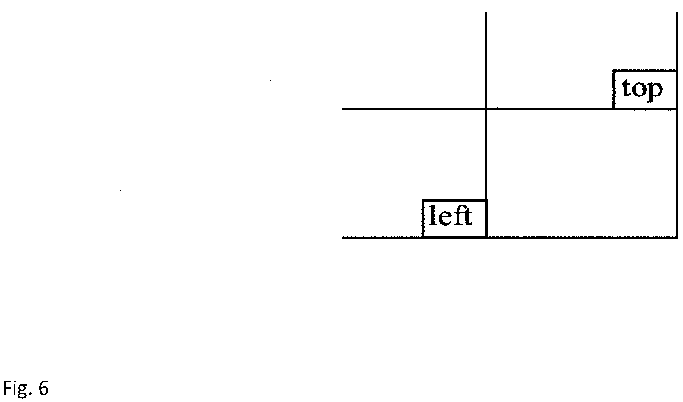

Then, the intra and inter prediction signals are combined using weighted averaging, where the weight value is obtained depending on the coding modes of the top and left neighboring blocks (illustrated in Fig. 6) as follows:

- If the top neighbor is available and intra coded, then set isIntraTop to 1, otherwise set isIntraTop to 0;
- If the left neighbor is available and intra coded, then set isIntraLeft to 1, otherwise set isIntraLeft to 0;
- If (isIntraLeft + isIntraTop) is equal to 2, then wt is set to 3;
- Otherwise, if (isIntraLeft + isIntraTop) is equal to 1, then wt is set to 2;
- Otherwise, set wt to 1.

The CIIP prediction is formed as follows:

$$P_{\text{CIIP}} = \left((4 - wt) * P_{inter} + wt * P_{intra} + 2\right) \gg 2$$

Transform coding in VVC

In VVC, large block-size transforms, up to 64×64 in size, are enabled, which is primarily useful for higher resolution video, e.g., 1080p and 4K sequences. High frequency transform coefficients are zeroed out for the transform blocks with a size (width or height, or both width and height) equal to 64, so that only the lower-frequency coefficients are retained. For example, for a M×N transform block, with M as the block width and N as the block height, when M is equal to 64, only the left 32 columns of transform coefficients are kept. Similarly, when N is equal to 64, only the top 32 rows of transform coefficients are kept. When a transform skip mode is used for a large block, the entire block is used without zeroing out any values. In addition, a transform shift is removed in the transform skip mode.

*Multiple transform selection (MTS) for core transform*

In addition to DCT-II which has been employed in HEVC, a Multiple Transform Selection (MTS) scheme is used for residual coding both inter and intra coded blocks. It uses multiple selected transforms from the DCT8/DST7. The transform matrices are DST-VII and DCT-VIII. The table below shows the basis functions of the selected DST/DCT.

Transform basis functions of DCT-II/ VIII and DSTVII for N-point input

| Transform Type | Basis function $T_i(j)$, $i,j = 0, 1,..., N\text{-}1$ |
|---|---|
| DCT-II | $T_i(j) = \omega_0 \cdot \sqrt{\dfrac{2}{N}} \cdot \cos\left(\dfrac{\pi \cdot i \cdot (2j + 1)}{2N}\right)$ <br><br> where, $\quad \omega_0 = \begin{cases} \sqrt{\dfrac{2}{N}} & i = 0 \\ 1 & i \neq 0 \end{cases}$ |
| DCT-VIII | $T_i(j) = \sqrt{\dfrac{4}{2N + 1}} \cdot \cos\left(\dfrac{\pi \cdot (2i + 1) \cdot (2j + 1)}{4N + 2}\right)$ |
| DST-VII | $T_i(j) = \sqrt{\dfrac{4}{2N + 1}} \cdot \sin\left(\dfrac{\pi \cdot (2i + 1) \cdot (j + 1)}{2N + 1}\right)$ |

In order to keep the orthogonality of the transform matrix, the transform matrices are quantized more accurately than the transform matrices in HEVC. To keep the intermediate values of the transformed coefficients within the 16-bit range, after horizontal and after vertical transform, all the coefficients are to have 10-bit.

In order to control the MTS scheme, separate enabling flags are specified at the Sequence Parameter Set (SPS) level for intra and inter, respectively. When MTS is enabled at SPS, a CU level flag is signaled to indicate whether MTS is applied or not. MTS may be applied only for luma. The MTS signaling is skipped when one of the below conditions is applied.

- The position of the last significant coefficient for the luma transform block (TB) is less than 1, i.e., DC only.
- The last significant coefficient of the luma TB is located inside the MTS zero-out region.

If a MTS CU flag is equal to zero, then DCT2 is applied in both directions. However, if the MTS CU flag is equal to one, then two other flags are additionally signaled to indicate the transform type for the horizontal and vertical directions, respectively. A transform and signaling mapping table is shown below. A unified transform selection for intra sub-partitions (ISP) and an implicit MTS is used by removing the intra-mode and blockshape dependencies. If a current block is in ISP mode or if the current block is an intra block and both intra and inter explicit MTS is on, then only DST7 is used for both horizontal and vertical transform cores. When it comes to transform matrix precision, 8-bit primary transform cores are used. Therefore, all the transform cores used in HEVC are kept the same, including 4-point DCT-2 and DST-7, 8-point, 16-point and 32-point DCT-2. Also, other transform cores including 64-point DCT-2, 4-point DCT-8, 8-point, 16-point, 32-point DST-7 and DCT-8, use 8-bit primary transform cores.

Transform and signaling mapping table

| MTS_CU_flag | MTS_Hor_flag | MTS_Ver_flag | Intra/inter | |
|---|---|---|---|---|
| | | | Horizontal 1 | Vertical |
| 0 | | | DCT2 | |
| 1 | 0 | 0 | DST7 | DST7 |
| | 0 | 1 | DCT8 | DST7 |
| | 1 | 0 | DST7 | DCT8 |
| | 1 | 1 | DCT8 | DCT8 |

To reduce the complexity of large size DST-7 and DCT-8 blocks, high frequency transform coefficients are zeroed out for the DST-7 and DCT-8 blocks with a size (width or height, or both width and height) equal to 32. Only the coefficients within the 16x16 lower-frequency region are retained.

As in HEVC, the residual of a block may be coded using a transform skip mode. To avoid a redundancy of syntax coding, the transform skip flag is not signaled when the CU level MTS_CU_flag is not equal to zero. An implicit MTS transform is set to DCT2 when a low-frequency non-separable transform (LFNST) or a matrix-based intra prediction

(MIP) is activated for the current CU. Also the implicit MTS may be still enabled when MTS is enable for inter coded blocks.

*Low-frequency non-separable transform (LFNST)*

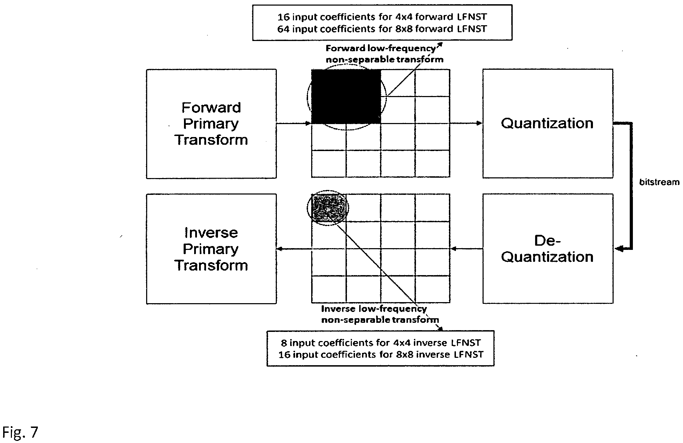

In VVC, LFNST is applied between the forward primary transform and the quantization (at encoder) and between the de-quantization and the inverse primary transform (at decoder side) as shown in Fig. 7. In LFNST, a 4x4 non-separable transform or an 8x8 non-separable transform is applied according to block size. For example, 4x4 LFNST is applied for small blocks (i.e., min(width, height) < 8) and 8x8 LFNST is applied for larger blocks (i.e., min(width, height) > 4).

The application of a non-separable transform, which is being used in LFNST, is as follows:

To apply a 4x4 LFNST, the 4x4 input block X

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

is first represented as a vector $\vec{X}$ :

$$\vec{X} = [X_{00} \quad X_{01} \quad X_{02} \quad X_{03} \quad X_{10} \quad X_{11} \quad X_{12} \quad X_{13} \quad X_{20} \quad X_{21} \quad X_{22} \quad X_{23} \quad X_{30} \quad X_{31} \quad X_{32} \quad X_{33}]^T$$

The non-separable transform is obtained as $\vec{F} = T \cdot \vec{X}$, where $\vec{F}$ indicates the transform coefficient vector, and T is a 16x16 transform matrix. The 16x1 coefficient vector $\vec{F}$ is subsequently re-organized as 4x4 block using the scanning order for that block (horizontal, vertical or diagonal). The coefficients with smaller index are placed with the smaller scanning index in the 4x4 coefficient block.

*Reduced Non-separable transform*

LFNST (low-frequency non-separable transform) is based on a direct matrix multiplication approach to apply a non-separable transform so that it is implemented in a single pass without multiple iterations. However, the non-separable transform matrix dimension needs to be reduced to minimize computational complexity and memory space to store the transform coefficients. Hence, a reduced non-separable transform (RST) method is used in LFNST. The main idea of the reduced non-separable transform is to map a **N** (**N** is commonly equal to 64 for an 8x8 Non-Separable Secondary Transforms (NSST)) dimensional vector to an **R** dimensional vector in a different space, where **N/R** (**R** < **N**) is the reduction factor. Hence, instead of a NxN matrix, the RST matrix becomes an **R**×**N** matrix as follows:

$$T_{RxN} = \begin{bmatrix} t_{11} & t_{12} & t_{13} & \cdots & t_{1N} \\ t_{21} & t_{22} & t_{23} & & t_{2N} \\ & \vdots & & \ddots & \vdots \\ t_{R1} & t_{R2} & t_{R3} & \cdots & t_{RN} \end{bmatrix}$$

where the **R** rows of the transform are **R** bases of the N dimensional space. The inverse transform matrix for RST is the transpose of its forward transform. For an 8x8 LFNST, a reduction factor of 4 is applied, and a 64x64 direct matrix, which is a conventional 8x8 non-separable transform matrix size, is reduced to a 16x48 direct matrix. Hence, the $48 \times 16$ inverse RST matrix is used at the decoder side to generate core (primary) transform coefficients in $8 \times 8$ top-left regions. When 16x48 matrices are applied instead of 16x64 matrices with the same transform set configuration, each of which takes 48 input data from three 4x4 blocks in a top-left 8x8 block excluding a right-bottom 4x4 block. With the help of the reduced dimension, memory usage for storing all LFNST matrices is reduced from 10KB to 8KB with reasonable performance drop. In order to reduce complexity LFNST is restricted to be applicable only if all coefficients outside the first coefficient sub-group are non-significant. Hence, all primary-only transform coefficients have to be zero when LFNST is applied. This allows a conditioning of the LFNST index signaling on the last-significant position, and hence avoids the extra coefficient scanning in the current LFNST design, which is needed for checking for significant coefficients at specific positions only. The worst-case handling of LFNST (in terms of multiplications per pixel) restricts the non-separable transforms for 4x4 and 8x8 blocks to 8x16 and 8x48 transforms, respectively. In those cases, the last-significant scan position has to be less than 8 when LFNST is applied, for other sizes less than 16. For blocks with a shape of 4xN and Nx4 and N > 8, the proposed restriction implies that the LFNST is now applied only once, and to the top-left 4x4 region only. As all primary-only coefficients are zero when LFNST is applied, the number of operations needed for the primary transforms is reduced in such cases. From an encoder perspective, the quantization of coefficients is remarkably simplified when LFNST transforms are tested. A rate-distortion optimized quantization has to be done at maximum for the first 16 coefficients (in scan order), the remaining coefficients are enforced to be zero.

*LFNST transform selection*

In total, there are 4 transform sets, and 2 non-separable transform matrices (kernels) per transform set are used in LFNST. The mapping from the intra prediction mode to the transform set is pre-defined as shown in the table below. If one of three Cross-Component Linear Model (CCLM) modes (INTRA_LT_CCLM, INTRA_T_CCLM or INTRA_L_CCLM) is used for the current block (81 <= predModeIntra <= 83), transform set 0 is selected for the current chroma block. For each transform set, the selected non-separable secondary transform candidate is further specified by the explicitly signaled LFNST index. The index is signaled in a bit-stream once per Intra CU after the transform coefficients.

| IntraPredMode | Transform set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |

(continued)

| IntraPredMode | Transform set index |
|---|---|
| 56 <= IntraPredMode<= 80 | 1 |
| 81 <= IntraPredMode<= 83 | 0 |

Transform selection table

*LFNST index Signaling and interaction with other tools*

Since LFNST is restricted to be applicable only if all coefficients outside the first coefficient sub-group are non-significant, the LFNST index coding depends on the position of the last significant coefficient. In addition, the LFNST index is context coded but does not depend on the intra prediction mode, and only the first bin is context coded. Furthermore, LFNST is applied for intra CU in both intra and inter slices, and for both Luma and Chroma. If a dual tree is enabled, LFNST indices for Luma and Chroma are signaled separately. For an inter slice mode (the dual tree is disabled), a single LFNST index is signaled and used for both Luma and Chroma.

Considering that a large CU being greater than 64x64 is implicitly split (TU tiling) due to the existing maximum transform size restriction (64x64), an LFNST index search may increase data buffering by four times for a certain number of decode pipeline stages. Therefore, the maximum size that LFNST is allowed is restricted to 64x64. Note that LFNST is enabled with DCT2 only. The LFNST index signaling is placed before the MTS index signaling.

From the use of scaling matrices for perceptual quantization is not evident that the scaling matrices that are specified for the primary matrices may be useful for LFNST coefficients. Hence, using the scaling matrices for LFNST coefficients is not allowed. For a single-tree partition mode, a chroma LFNST is not applied.

Transform coding in Enhanced Compression Model (ECM)

In the current VVC design, for MTS, only DST7 and DCT8 transform kernels are utilized which are used for intra and inter coding.

Additional primary transforms including DCT5, DST4, DST1, and an identity transform (IDT) are employed. Also, a MTS set is made dependent on the TU size and intra mode information. For blocks predicted via an intra template matching prediction (IntraTMP), a Decoder side intra mode derivation (DIMD) process is used on the prediction block to derive an intra mode that is used for the transform selection. Specifically, a horizontal gradient and a vertical gradient are obtained for each predicted sample to build a histogram of gradients (HoG). Then the intra prediction mode with the largest histogram amplitude values is used to select the MTS transform set.

Overall, 16 different TU sizes are considered, and for each TU size 5 different classes are considered depending on intra-mode information. For each class, 1, 4 or 6 different transform pairs are considered. The number of intra MTS candidates are adaptively selected (between 1, 4 and 6 MTS candidates) depending on the sum of absolute value of the transform coefficients. The sum is compared against two fixed thresholds to determine the total number of allowed MTS candidates:

1 candidate: sum <= th0
4 candidates: th0 < sum <= th1
6 candidates: sum > th1

Although a total of 80 different classes are considered, some of the different classes often share exactly the same transform set. So there are 58 (less than 80) unique entries in the resultant look-up-table (LUT).

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80.

*Inter MTS optimization in ECM*

For the MTS of inter-coded CUs, four candidates: {(DST7, DST7), (DST7, DCT8), (DCT8, DST7), (DCT8, DCT8)} are used for every CU. For the larger resolution sequences (width > 1080) the maximum CU size for Inter-MTS usage is set to 32 (i.e., Inter-MTS is used for CU with a width <=32 and a height <=32), and for the remaining sequences (smaller resolution) it is set to 16. For 4-pt, 8-pt and 16-pt transforms, the current Adaptive Multiple Transform (AMT) cores, i.e., DST-7 and DCT-8, are replaced with separable Karhunen-Loève Transforms (KLTs), as proposed in JVET-J0021.

*LFNST extension with large kernel in ECM*

The LFNST design in VVC is extended as follows:

-    The number of LFNST sets (S) and candidates (C) are extended to S=35 and C=3, and the LFNST set (lfnstTrSetIdx) for a given intra mode (predModeIntra) is derived according to the following formula:

      ◦ For predModeIntra < 2, lfnstTrSetIdx is equal to 2
      ◦ lfnstTrSetIdx = predModeIntra, for predModeIntra in [0,34]
      ◦ lfnstTrSetIdx = 68 - predModeIntra, for predModeIntra in [35,66]

-    Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively.

The kernel dimensions are specified by:

$$(LFSNT4, LFNST8^*, LFNST16^*) = (16x16, 32x64, 32x96)$$

The forward LFNST is applied to the top-left low frequency region, which is called the Region-Of-Interest (ROI). When LFNST is applied, primary-transformed coefficients that exist in the region other than ROI are zeroed out, which is not changed from the VVC standard.

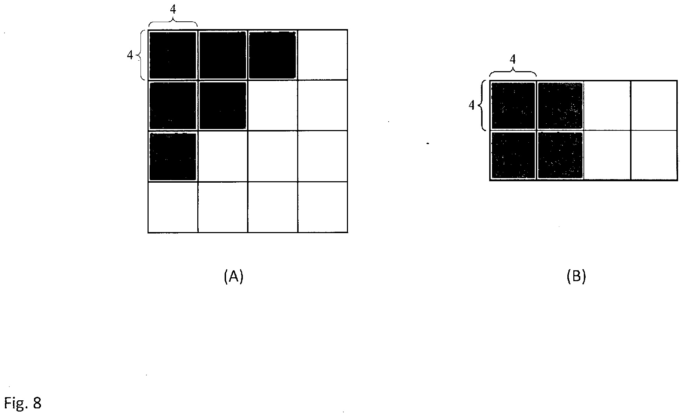

The ROI for LFNST16 is depicted in Fig. 8(A). It consists of six 4x4 sub-blocks, which are consecutive in scan order. Since the number of input samples is 96, the transform matrix for forward LFNST16 may be Rx96. R may be chosen to be 32, and 32 coefficients (two 4x4 sub-blocks) are generated from forward LFNST16 accordingly, which are placed following the coefficient scan order.

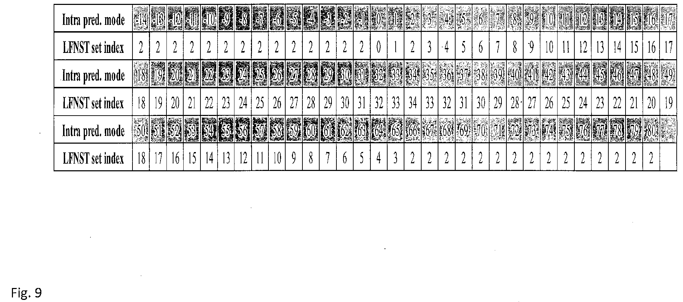

The ROI for LFNST8 is shown in Fig. 8(B). The forward LFNST8 matrix may be Rx64 and R is chosen to be 32. The generated coefficients are located in the same manner as with LFNST16. The mapping from intra prediction modes to these sets is shown in the Table illustrated in Fig. 9.

*Non-separable primary transform (NSPT) for intra coding*

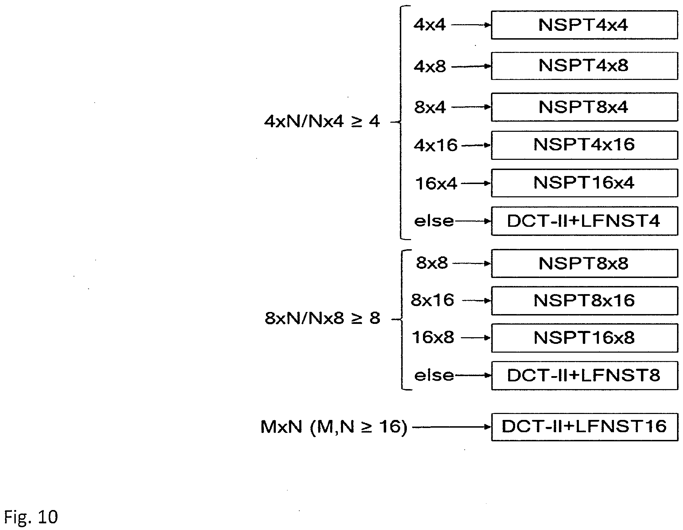

The separable DCT-II plus LFNST transform combinations are replaced with NSPT for the block shapes 4x4, 4x8, 8x4 and 8x8, 4x16, 16x4, 8x16 and 16x8. The affected block sizes are summarized in Fig. 10 which illustrates an overview of proposed NSPTs among existing LFNSTs.

All NSPTs consist of 35 sets and 3 candidates (similar to the current LFNST). The kernels of NSPTs have the following shapes:

-    NSPT4x4: 16x16
-    NSPT4x8/NSPT8x4: 32x20
-    NSPT8x8: 64x32
-    NSPT4x16/NSPT16x4: 64x24
-    NSPT8x16/NSPT16x8: 128x40
-    NSPT4x32/NSPT32x4: 128x20
-    NSPT8x32/NSPT32x8: 256x24

Therefore, 12, 32, 40 and 88 coefficients are zeroed-out using NSPT4x8/NSPT8x4, NSPT8x8, NSPT4x16/NSPT16x4 and NSPT8x16/NSPT16x8 respectively. For NSPT4x32/NSPT32x4 and NSPT8x32/NSPT32x8, the remaining 108 and 232 positions in each transform block are zeroed-out, respectively.

*NSPT/LFNST context modeling for transform coefficient coding*

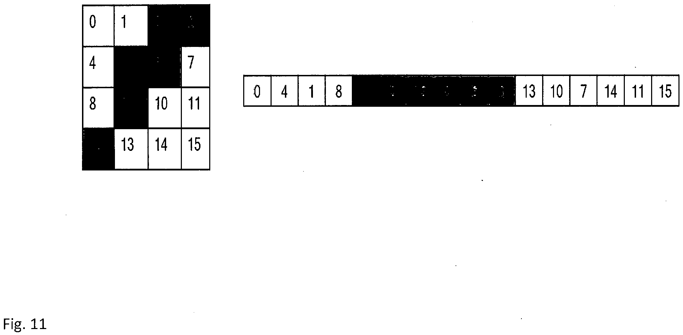

For the coding of LFNST/NSPT coefficients, a modified context model using the previous 5 coefficients in the coding order are used for context derivation instead of the 2D coefficient neighborhood. Fig. 11 illustrates the context modeling for LFNST/NSPT coefficients. The lfnstldx is signaled after all last_sig_coeff_pos syntax elements in a CU since lfsntldx is required for parsing the transform coefficients.

*Utilizing LFNST/NSPT for MIP, intraTMP and inter coding*

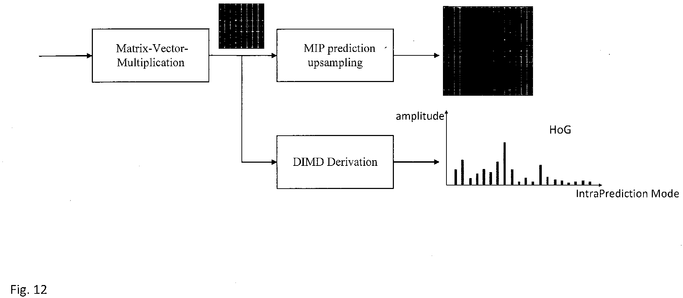

To utilize LFNST/NSPT for MIP, intraTMP and inter coding, a virtual intra prediction mode (VIPM) is employed. Each VIPM represents a kind of feature, for example, a specific direction. The VIPM is derived by applying a DIMD-like process to the prediction block. The horizontal and vertical gradients of pixels inside the prediction block are obtained using a Sobel operator and the horizontal and vertical gradients of each pixel are used to derive a direction. The amplitudes of the gradient of each pixel are accumulated for the corresponding direction. The intra prediction mode corresponding to the strongest accumulation is selected as the VIPM. With the VIPM, the transform set of LFNST/NSPT may be derived.
For MIP, the DIMD-like process is done before upsampling. Specifically, a horizontal gradient and a vertical gradient are obtained for each predicted sample to build a HoG, as is shown in Fig. 12. Then the intra prediction mode with the largest histogram amplitude value is used to determine the LFNST transform set and the LFNST Transpose flag.
For inter coding, the kernel mapping method is the same as that for intra LFNST/NSPT.
As has been mentioned earlier, one or more aspects or tools of a codec may use derived intra prediction modes, e.g., in certain inter prediction modes, an intra prediction mode is derived and used as:

- a fusion mode in a combined intra and inter mode (CIIP),
- for a transform selection of the inter block,
- for transform selection of IBC or intraTMP block.

In such cases, the intra prediction is derived from inter prediction samples. However, this intra prediction mode derivation from a prediction in inter blocks introduces a latency, e.g., in the (de)coding pipeline for a given block because in conventional approaches a motion compensation process and an intra mode derivation process are executed sequentially as the intra mode derivation requires the motion compensated samples to be available or ready, i.e.,' given the nature of the process, the intra mode derivation process can only be started once the motion compensation process is completed.

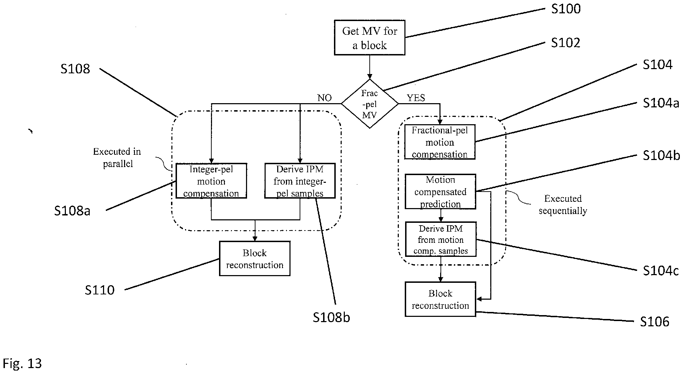

Fig. 13 illustrates a conventional intra mode derivation for a transform selection in inter blocks. The process includes the following:

S100: Obtaining a motion vector (MV) for a currently processed block of a picture.
S102: Determining whether the motion vector is a fractional-pel motion vector or an integer-pel motion vector.

If the motion vector is a fractional-pel vector, the process includes the following:

S104: Performing sequentially a fractional-pel motion compensation S104a, a motion compensated prediction S104b for obtaining motion compensated samples, and an IPM derivation S104c for obtaining one or more IPMs from the motion compensated samples.
S106: Reconstructing the block using the motion compensated samples and the obtained IPMs.

If the motion vector is an integer-pel vector, the process includes the following:

S108: Performing in parallel an integer-pel motion compensation S108a and an IPM derivation S108b for obtaining the one or more IPMs from integer-pel location samples of the integer-pel vector.
S110: Reconstructing the block using the integer-pel motion compensation and the obtained IPMs.

As discussed above, some blocks that are coded in non-intra modes may still use an intra mode in the (de)coding process, e.g.,

- a transform selection (MTS, LFNST, etc.) for such blocks may be done by using a virtual intra prediction mode, or
- a combined intra and inter prediction (CIIP) mode may be applied to blend inter and intra prediction in order to obtain a final block prediction.

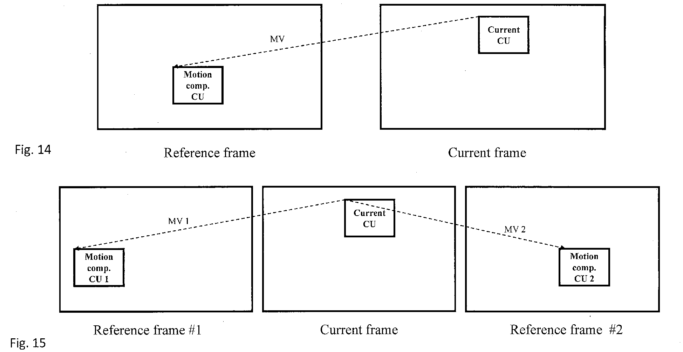

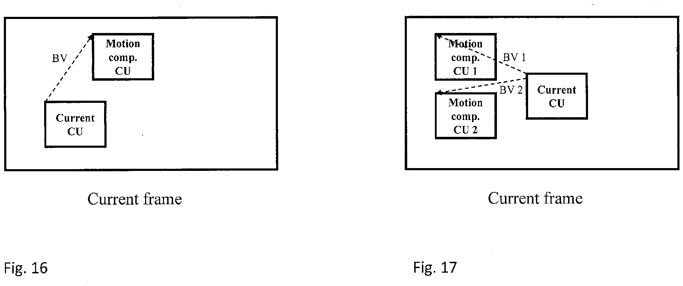

In such blocks, the motion compensated prediction may be obtained in various ways, e.g., as a uni-prediction, a bi-prediction or a multi-hypothesis prediction. In the case of inter-coded blocks, the motion compensated prediction is obtained from one or more reference frames, and in case of however, in the case non-inter-coded blocks, like IBC-coded or intraTMP coded blocks, the motion compensated prediction is obtained from the same frame as current frame. Fig. 14 illustrates an example of a uni-prediction motion compensation from one reference frame, Fig. 15 illustrates an example of a bi-prediction motion compensation from two reference frames, Fig. 16 illustrates an example of a uni-prediction motion compensation in IBC from a current frame, and Fig. 17 illustrates an example of a bi-prediction motion compensation in IBC from a current frame.

The motion compensation may use different precisions in the prediction process. For example, motion vectors (in inter blocks) and block vectors (in IBC and intraTMP blocks) may use full-pel, half-pel or quarter-pel precisions.

The transform selection mechanism of inter, IBC and intraTMP blocks may use a texture analysis method such as the above described DIMD process or a different intra mode derivation method such as the above described TIMD.

Embodiments of the present disclosure addresses the drawbacks by reducing the latency related to the intra prediction mode (IPM) derivation in non-intra coded blocks, such as inter, IBC and intraTMP coded blocks, by using the prediction samples which are obtained from integer-pel motion vectors or block vectors instead of interpolated samples after a fractional-pel motion compensation process in order to derive the intra prediction modes. Thus, the fractional-pel motion compensation and the intra mode derivation for a block can be executed in parallel without introducing additional latency in the (de)coding pipeline of the block.

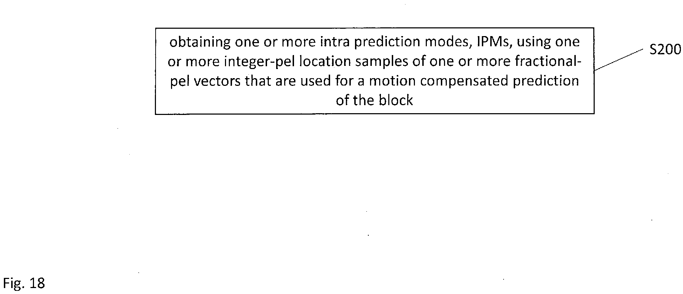

Fig. 18 illustrates a flow diagram of an embodiment of a method of processing one or more blocks of a picture. The method includes the following:

S200: Obtaining one or more intra prediction modes, IPMs, using one or more integer-pel location samples of one or more fractional-pel vectors that are used for a motion compensated prediction of the block.

In accordance with embodiments, for an inter-coded block, one or more intra prediction modes are obtained using integer-pel location samples of the one of more of the motion vectors that are used for the block prediction.

In accordance with embodiments, for an IBC-coded block or an intraTMP-coded block, one or more intra prediction modes are obtained using integer-pel location samples of the one of more of the block vectors that are used for the block prediction.

In accordance with embodiments, the motion compensation and intra prediction mode derivation may be executed in parallel at the encoder and/or decoder sides.

In accordance with embodiments, a decision for using the inventive approach, i.e., using integer-pel or fractional-pel motion compensated samples for the intra mode derivation may be signaled in a bitstream in various ways. For example, it may be indicated per CU, PU, TU, CTU, slice, picture or sequence.

In accordance with other embodiments, the inventive approach, i.e., using integer-pel or fractional-pel motion compensated samples for the intra mode derivation, may always be used when there are one or more fractional-per motion vectors, MVs. However, there may be certain implicit restrictions, for example using the integer-pel part of the motion vectors may be used only in a certain precision of MVs such as half-per or quarter-per MVs. This may be defined in the specification of the codec. In accordance with further embodiments, the codec may impose one or more restrictions for using the inventive approach, e.g., depending on the prediction mode, the block size, etc. Such restrictions may be defined in the specification of the codec. Thus, the decision for using the inventive approach, i.e., using integer-pel or fractional-pel motion compensated samples for the intra mode derivation, may be decided implicitly, e.g., at the decoder side, based on certain criteria such as a prediction mode of the block. When the prediction mode employs a motion compensation using two or more reference pictures, the IPM derivation may use integer-pel samples from the reference picture which is in closer distance to the current frame than the further away reference picture, since the closer the reference picture the more reliable integer-pel samples may be obtained for IPM derivation. In accordance with other examples, the certain criteria may include a motion vector or a block vector precision of the block, and the inventive approach for obtaining the one or more IPMs may be used if the motion vector precision or the block vector precision of the block is at or above a precision threshold. In accordance with yet other examples, the certain criteria include a block size. For example, the inventive approach for obtaining the one or more IPMs may be used if the block size of the currently processed block is at or above a size threshold.

On the other hand, in accordance with embodiments, the inventive approach for obtaining the one or more IPMs may not be used

- if the motion vector precision or the block vector precision of the block is below the precision threshold, or
- if the block size of the currently processed block is below the size threshold.

In accordance with embodiments, when the block prediction is obtained by combining two or more motion compensated predictions, the intra mode derivation may use one or more of the corresponding integer-pel location samples of one, some or each motion compensated prediction in the intra mode derivation.

In accordance with embodiments, the decision which of the one or more of the integer-pel location samples of the motion compensated predictions are to be used may be signaled explicitly in the bitstream. In accordance with other embodiments, if the motion compensation uses two reference frames, the IPM derivation may use integer-pel samples from the reference frame which provides more reliable samples. In accordance with other examples. In accordance with yet other embodiments, the integer-pel location samples may be determined implicitly, e.g., at the decoder side, based on, for example, motion information of each motion compensated prediction, or it may be determined based on a temporal distance or a quality or a type of the reference picture used for motion compensation. For example,

- if the motion compensation uses two reference pictures, the IPM derivation may use integer-pel samples from the reference picture which is in closer distance to the current frame than the further away reference picture, since the closer the reference picture, the more reliable integer-pel samples may be obtained for the IPM derivation, or
- if one of the reference pictures in a motion compensated bi-predicted block is coded at a quantization parameter, QP, 22 and the other reference picture is coded at QP 25, the intra mode derivation mechanism may implicitly decide to use the samples from the reference picture with QP 22 as its samples may be more reliable for the intra mode derivation, or
- integer-pel samples from one or more reference pictures of a certain temporal layer ID may be used, or
- integer-pel samples from one or more reference pictures of a certain picture or slice type may be used.

In accordance with embodiments, the intra mode derivation may utilize a texture analysis mechanism, such as DIMD or TIMD, for determining the intra modes.

In accordance with embodiments, when a block prediction is obtained by combining two or more motion compensated predictions, the intra mode derivation mechanism may use the associated weights of the motion compensated predictions in its intra derivation process. For example, when the intra mode derivation uses the DIMD mechanism, the gradient values of samples obtained by each corresponding integer-pel location may be weighted similarly.

In accordance with embodiments, when a block prediction is obtained by combining two or more motion compensated predictions, the intra mode derivation mechanism may use only integer-pel samples from the prediction with the highest blending weight.

In accordance with embodiments, the derived intra prediction modes may be used in transform selection of the block.

In accordance with embodiments, the derived intra prediction modes may be used for obtaining intra prediction samples. These intra predicted samples are used in a CIIP-like method where they are combined with the motion compensated prediction samples in order to form the block prediction.

In accordance with embodiments, the derived intra prediction modes may be used in the coding of blocks other than the current block. For example, the derived prediction modes may be used in a most probable mode (MPM) of a future block. In another example, the derived intra prediction mode may be used for coding a block in a different channel through MPM or for a transform selection of that block.

Embodiments of the present disclosure propose methods for reducing a latency related to an intra prediction mode (IPM) derivation process in non-intra coded blocks such as inter-coded, IBC-coded and intraTMP-coded blocks so that the fractional-pel motion compensation and the intra mode derivation processes can be executed in parallel. Embodiments target a latency reduction of the IPM derivation for non-intra coded blocks when the motion compensation process uses fractional-pel precision for the block prediction. When the motion compensation process uses integer-pel precision for the block prediction, conventional approaches may be used.

Embodiments of the present disclosure are now described in more detail. Although the following embodiments are described in the context of inter-coded blocks with motion vectors, it is noted that the present disclosure is not limited to the use with inter-coded blocks. Rather, in accordance with other embodiments, the present disclosure is applicable also to non-inter-coded blocks, like to IBC and intraTMP coded blocks.

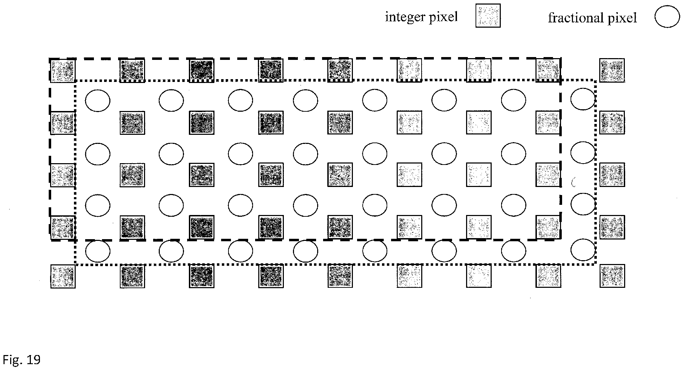

Motion vectors of an inter block may be integer-pel motion vectors (MV) or may be fractional-pel motion vectors. When the MV of a block is an integer-pel MV, its motion compensated prediction can be obtained by copying the corresponding integer location samples from the reference frame without additional interpolation processes. However, when a block uses fractional-pel motion vectors, then depending on the MV precision, the prediction samples are interpolated using different interpolation filters which are defined in the underlying codec. Fig. 19 illustrates an example of fractional-pel and integer-pel location samples in a reference frame.

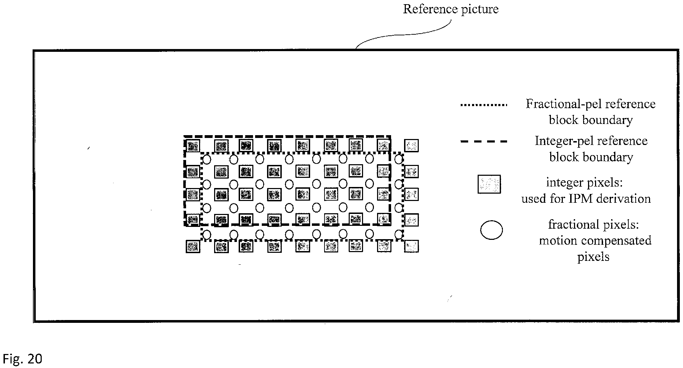

In order to remove the dependency of the IPM derivation from the interpolated samples, the present disclosure proposes to use the integer-pel samples for this process. When a block uses a fractional-pel motion compensation for the block prediction, embodiments of the present disclosure use the integer-pel MV part of the fractional MV in order to identify the integer-pel location samples in the reference frame. The integer-pel location samples are already available in the decoded picture buffer (DPB) and may be fetched and used in the IPM derivation. Since, there is no dependency of this process to the motion compensation part, these two processes can be executed in parallel. Fig. 20 illustrates an example of the integer-pel samples from a reference frame, which are used for the IPM derivation, and of the fractional-pel samples (motion compensated samples) of an $8{\times}4$ block size.

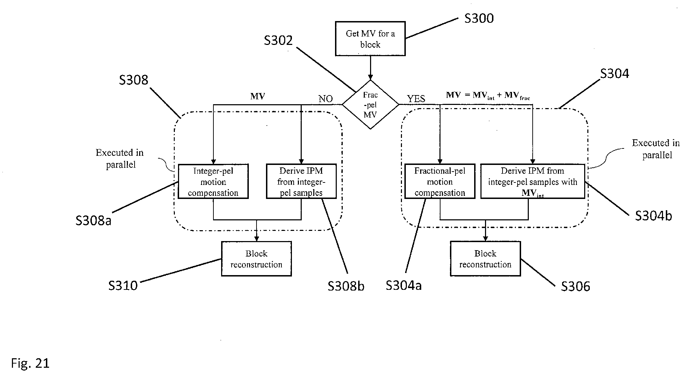

Fig. 21 illustrates executing an IPM derivation and a uni-predicted motion compensation in parallel in accordance with an embodiment of the present disclosure. The process includes the following:

S300: Obtaining a motion vector MV for a currently processed block of a picture.

S302: Determining whether the motion vector MV is a fractional-pel motion vector or an integer-pel motion vector. As is illustrated, a fractional-pel motion vector has an integer-pel part $MV_{int}$ and a fractional-pel part MV frac, i.e., MV = $MV_{int}$ + MVfrac. The integer-pel motion vector having only integer-pel part is indicated as MV.

If the motion vector MV is a fractional-pel vector, the process includes the following:

S304: Performing in parallel a fractional-pel motion compensation S304a using MV and an IPM derivation S304b for obtaining the one or more IPMs. The IPM derivation S304b uses the one or more integer-pel location samples of the fractional-pel vector MV, i.e., only the integer-pel part $MV_{int}$ of MV is used so that the IPM(s) can be derived independent of the motion compensation S304a, thereby allowing the processes to be performed in parallel.

S306: Reconstructing the block using the fractional-pel motion compensation and the obtained IPMs.

If the motion vector MV is an integer-pel vector, the process includes the following:

S308: Performing in parallel an integer-pel motion compensation S308a and an IPM derivation S308b for obtaining the one or more IPMs. The IPM derivation S308b uses one or more integer-pel location samples of the integer-pel vector.

S310: Reconstructing the block using the integer-pel motion compensation and the obtained IPMs.

In accordance with embodiments, the IPM derivation S304b uses the integer part of the motion vector MV to fetch the one or more integer-pel location samples of the reference picture area. The one or more integer-pel location samples may be obtained from a decoded picture buffer (DPB).

Thus, in accordance with the embodiment of Fig. 21, when a block is coded in inter mode, the motion vector, MV, precision is checked.

- If the MV precision is integer, the left-side process in Fig. 21 is used, and, by default, the IPM derivation and the motion compensation can be executed in parallel as there is no interpolation required for the motion compensation.
- If the block uses a fractional-pel MV, then the right-side process in Fig. 21 is used in order to reduce the latency in the pipeline. For this, the integer part of MV is used to fetch the integer-pel location samples from the reference picture area. These samples are then used for the IPM derivation. Since, there is no dependency between IPM derivation and motion compensation, these two processes can be executed in parallel.

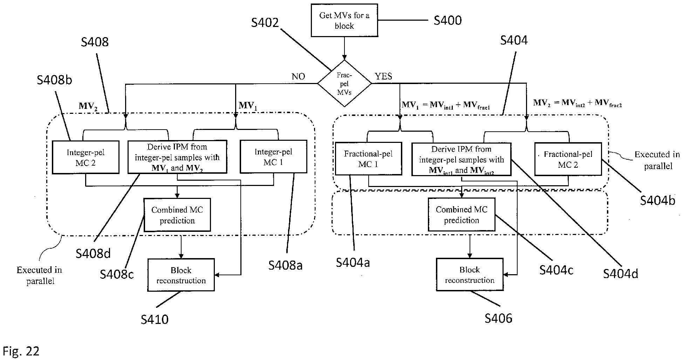

Fig. 22 illustrates executing an IPM derivation and a bi-predicted motion compensation in parallel in accordance with an embodiment of the present disclosure. The process includes the following:

S400: Obtaining two motion vectors MV1, MV2 for a currently processed block of a picture.

S402: Determining whether the two motion vector MV1, MV2 are fractional-pel motion vectors or integer-pel motion vectors. As is illustrated, the fractional-pel motion vectors MV1 and MV2 have respective integer-pel parts $MV_{int1}$ and $MV_{int2}$ and fractional-pel parts $MV_{frac1}$, $MV_{frac2}$, i.e., MV1 = $MV_{int1}$ + $MV_{frac1}$, and MV2 = $MV_{int2}$ + $MV_{frac2}$. The integer-pel motion vectors having only integer-pel parts are indicated as MV1, MV2.

If the two motion vectors MV1, MV2 are fractional-pel vectors, the process includes the following:

S404: Performing respective fractional-pel motion compensations S404a, S404b using the two motion vectors MV1, MV2 and obtaining S404c a combined motion compensated prediction. Performing, in parallel to the fractional-pel motion compensations S404a, S404b an IPM derivation S404d for obtaining the one or more IPMs. The IPM derivation S404d uses the integer-pel location samples of the two fractional-pel vectors MV1, MV2, i.e., only the integer-pel part $MV_{int1}$ of MV1 and the integer-pel part $MV_{int2}$ of MV2 are used so that the IPM(s) can be derived independent of the motion compensations S404a, S404b, thereby allowing the processes to be performed in parallel.

S406: Reconstructing the block using the combined motion compensated prediction and the obtained IPMs.

If the two motion vectors MV1, MV2 are integer-pel vectors, the process includes the following:

S408: Performing respective integer-pel motion compensations S408a, S408b using the two motion vectors MV1, MV2 and obtaining S408c a combined motion compensated prediction. Performing, in parallel to the integer-pel motion compensations S408a, S408b an IPM derivation S408d for obtaining the one or more IPMs. The IPM derivation S408d uses one or more integer-pel location samples of the two or more integer-pel vectors.

S410: Reconstructing the block using the combined motion compensated prediction and the obtained IPMs.

In accordance with embodiments, the IPM derivation S404d uses the integer parts of the motion vectors to fetch the one or more integer-pel location samples of two reference picture areas. The one or more integer-pel location samples may be obtained from a decoded picture buffer (DPB).

The present disclosure is not limited to a bi-predicted motion compensation, i.e., to processing only the two motion vectors MV1 and MV2. In accordance with other embodiments, more than two motion vectors may be used.

Thus, in accordance with the embodiment of Fig. 22, which shows an example of a bi-predicted motion compensation, similar to using the uni-predicted motion compensation of Fig. 21, when the MVs are in fractional-pel precision, the integer parts of the MVs are used for identifying and fetching the integer-pel location samples from the reference pictures for IPM derivation. Thus, like in the embodiment of Fig. 21,

- if when the block uses fractional-pel MVs, the right-side process Fig. 22 is used in order to reduce the latency in the pipeline. For this, the integer parts of the MVs are used to fetch the integer-pel location samples from the two reference picture areas. These samples are then used for the IPM derivation. Since, there is no dependency between IPM derivation and motion compensations, these two processes can be executed in parallel, and
- if the MV precision is integer, the left-side process in Fig. 22 is used, and, by default, the IPM derivation and motion compensations can be executed in parallel as there is no interpolation required for motion compensations.

In accordance with embodiments, in bi-prediction cases (see Fig. 22) or multi-hypothesis prediction cases, the blending weights, which are used for combining the motion compensated predictions, may also be considered when deriving the IPM(s) from the corresponding MV locations. For example, the final block prediction may use the following weights for combining motion compensated predictions:

$$Pred_{(x,y)} = (W_1 \times Pred1_{(x,y)} + W_2 \times Pred2_{(x,y)}) \gg shift$$

where $Pred1_{(x,y)}$ is the motion compensated prediction obtained by the first MV1 at location (x, y), $Pred2_{(x,y)}$ is the motion compensated prediction obtained by the second MV2 at location (x, y), $Pred_{(x,y)}$ is the combined motion compensated prediction at location (x, y), and $W_1$ and $W_2$ are the associated blending weights for the first and second motion compensated prediction. Moreover, *shift* is the bit-shift to the right operation. In accordance with embodiments, the IPM derivation mechanism may also incorporate these weights $W_1$ and $W_2$ for the corresponding integer-pel samples when calculating the intra modes. For example, if the IPM derivation process utilizes a DIMD-like texture analysis mechanism, the corresponding gradient values from each reference block area may be weighted according to the blending weights $W_1$ and $W_2$ of the corresponding motion compensated prediction. In another example, when the IPM derivation utilizes a TIMD-like mechanism, the distortion values of the TIMD process from each reference block area may be weighted according to the blending weights $W_1$ and $W_2$ of the corresponding motion compensated prediction.

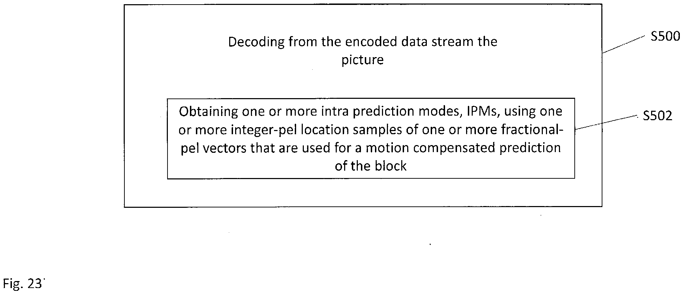

Fig. 23 illustrates a flow diagram of a method for decoding an encoded data stream, the encoded data stream including data representing a picture. The method includes the following:

S500: Decoding from the encoded data stream the picture.

Decoding the picture comprises obtaining S502 one or more intra prediction modes, IPMs, using one or more integer-pel location samples of one or more fractional-pel vectors that are used for a motion compensated prediction of the block.

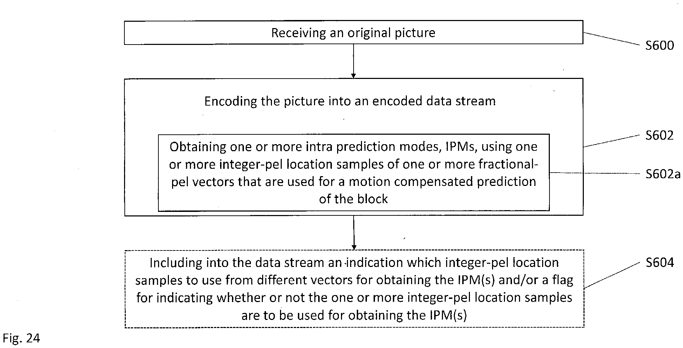

Fig. 24 illustrates a flow diagram of a method for encoding a picture into an encoded data stream. The encoded data stream includes data representing the picture and the method includes the following:

S600: Receiving an original picture.
S602: Encoding the picture into the encoded data stream.

Encoding the picture comprises obtaining S602a one or more intra prediction modes, IPMs, using one or more integer-pel location samples of one or more fractional-pel vectors that are used for a motion compensated prediction of the block.

Optionally, the method comprises including S604 into the data stream or bitstream

- an indication which integer-pel location samples of one or more fractional-pel vectors of two or more motion compensated predictions to use for obtaining the one or more intra prediction modes, IPMs, and/or
- a flag, the flag indicating whether or not the one or more integer-pel location samples of one or more fractional-pel vectors are to be used for obtaining one or more intra prediction modes, IPMs.

Further embodiments

So far, the inventive concept has been described with reference to aspects and embodiments concerning methods of obtaining one or more IPMs, e.g., for decoding and for encoding. In accordance with further embodiments, the present disclosure also provides an apparatus of obtaining one or more IPMs as well as encoders/decoders including such an apparatus.

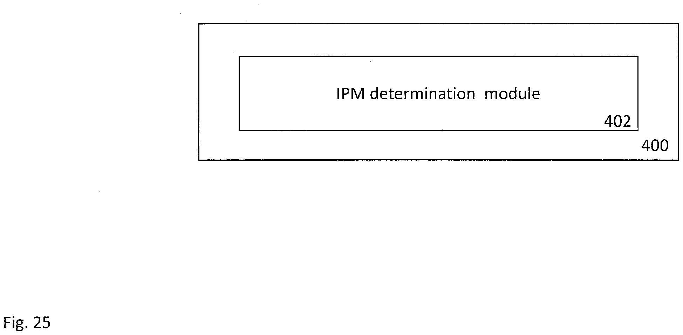

Fig. 25 illustrates a block diagram of an apparatus of predicting one or more blocks of a picture in accordance with embodiments of the present disclosure. The apparatus 400 includes the following modules:

402: An intra prediction mode, IPM, determination module configured to operate in accordance with embodiments of the present disclosure so as to obtain one or more intra prediction modes, IPMs, using one or more integer-pel location samples of one or more fractional-pel vectors that are used for a motion compensated prediction of the block.

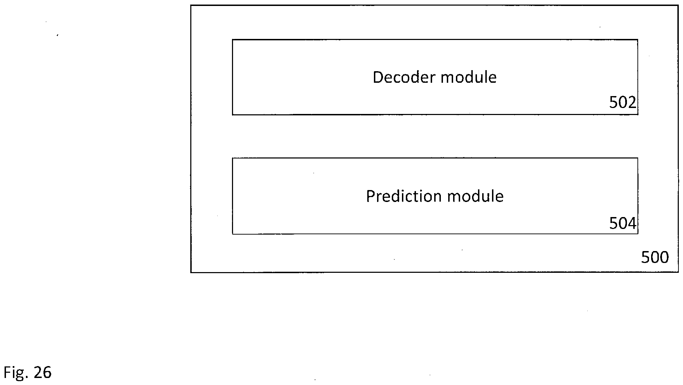

Fig. 26 illustrates a block diagram of a decoder for decoding an encoded data' stream in accordance with embodiments of the present disclosure. The encoded data stream includes data representing a picture. The decoder 500 includes the following modules:

502: A decoder module configured to decode from the encoded data stream the picture.

504: A prediction module, e.g., a prediction module 170 as depicted in Fig. 2. The prediction module 502 is configured to operate in accordance with embodiments of the present disclosure so as to obtain one or more intra prediction modes, IPMs, using one or more integer-pel location samples of one or more fractional-pel vectors that are used for a motion compensated prediction of the block. For example, the prediction module 502 includes an apparatus as described with reference to Fig. 25.

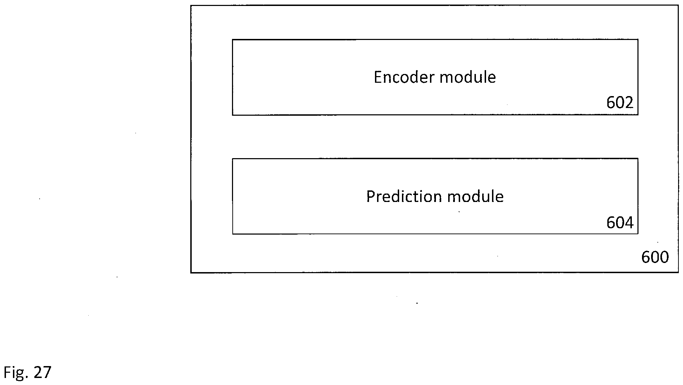

Fig. 27 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.

604: A prediction module, e.g., a prediction module 124 as depicted in Fig. 1. The prediction module 602 is configured to operate in accordance with embodiments of the present disclosure so as to obtain one or more intra prediction modes, IPMs, using one or more integer-pel location samples of one or more fractional-pel vectors that are used for a motion compensated prediction of the block. For example, the prediction module 502 includes an apparatus as described with reference to Fig. 25. '

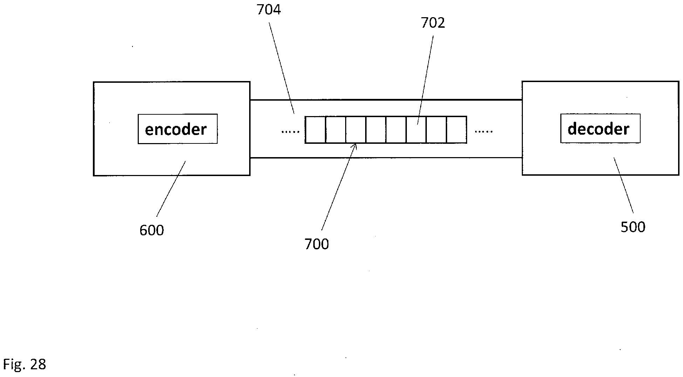

Fig. 28 illustrates a data stream 700 in accordance with embodiments of the present disclosure, which has encoded thereinto a picture and information data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may be

- an indication which integer-pel location samples of one or more fractional-pel vectors of two or more motion compensated predictions to use for obtaining the one or more intra prediction modes, IPMs, and/or
- a flag, the flag indicating whether or not the one or more integer-pel location samples of one or more fractional-pel vectors are to be used for obtaining one or more intra prediction modes, IPMs.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

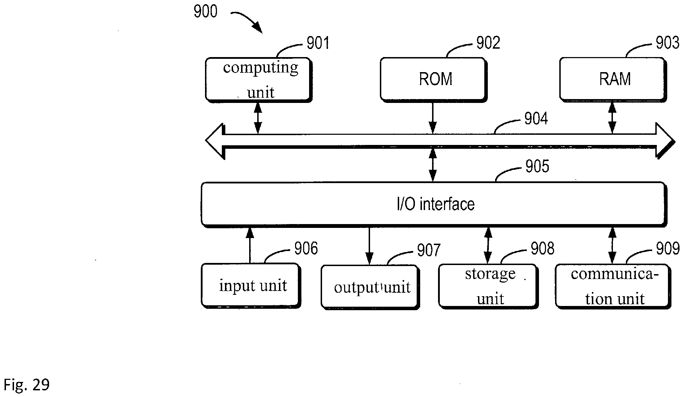

Fig. 29 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, the method comprising: obtaining one or more intra prediction modes, IPMs, using one or more integer-pel location samples of one or more fractional-pel vectors that are used for a motion compensated prediction of the block.

A 2nd embodiment provides the method of the 1st embodiment, wherein the one or more integer-pel location samples are identified using an integer-pel part of the fractional-pel vector.

A 3rd embodiment provides the method of the 1st embodiment or the 2nd embodiment, wherein processing the one or more blocks comprises a motion compensation using the one or more fractional-pel vectors, and wherein obtaining the one or more IPMs and the motion compensation are executed in parallel.

A 4th embodiment provides the method of any one of the preceding embodiments, wherein - the motion compensated prediction of the block is obtained using one or more motion compensated predictions from one or more reference picture areas, and the one or more IPMs are obtained using one or more of the integer-pel location samples of one, some or all of the motion compensated predictions.

A 5th embodiment provides the method of the 4th embodiment, wherein the one or more reference picture areas comprise:

one or more reference frames of a current frame, the current frame including the block currently processed, or
- a current frame including the block currently processed.

A 6th embodiment provides the method of the 5th embodiment, wherein the one or more motion compensated predictions comprise:

- one or more motion compensated blocks from the one or more reference frames, e.g., a motion compensated block from a single reference frame, or a first motion compensated block from a first reference frame and a second motion compensated block from a second reference frame, or
- one or more motion compensated blocks from the current frame.

A 7th embodiment provides the method of any one of the preceding embodiments, wherein the motion compensated prediction of the block is obtained using two or more motion compensated predictions, and the one or more IPMs are obtained using one or more of the integer-pel location samples of one or some or all of the motion compensated predictions.

An 8th embodiment provides the method of the 7th embodiment, wherein the integer-pel location samples of the two or more motion compensated predictions to be used are determined explicitly or implicitly.

A 9th embodiment provides the method of the 8th embodiment, wherein the integer-pel location samples of the two or more motion compensated predictions to be used are signaled in a data stream, e.g., a bitstream which includes data representing the picture.

A 10th embodiment provides the method of the 8th embodiment, wherein the integer-pel location samples of the two or more motion compensated predictions to be used are determined based on one or more of the following:

- motion information of each motion compensated prediction,
- a temporal distance or quality or type of the one or more reference picture areas used for motion compensation.

An 11th embodiment provides the method of the 10th embodiment, wherein one or more integer-pel location samples from reference picture areas are used which are coded at a certain quantization parameter, QP, like QP 22.

A 12th embodiment provides the method of any one of the 7th to 11th embodiments, wherein obtaining one or more IPMs uses weights associated with the respective motion compensated predictions.

A 13th embodiment provides the method of the 12th embodiment, wherein obtaining the one or more IPMs uses a decoder side intra mode derivation, DIMD, like texture analysis mechanism, and gradient values of the DIMD process for samples obtained for each integer-pel location are weighted according to blending weights of corresponding motion compensated predictions.

A 14th embodiment provides the method of the 12th embodiment, wherein obtaining the one or more IPMs uses a template-based intra mode derivation, TIMD, like mechanism, and distortion values of the TIMD process for samples obtained for each integer-pel location are weighted according to blending weights of corresponding motion compensated predictions.

A 15th embodiment provides the method of any one of the 7th to 11th embodiments, wherein obtaining the one or more IPMs uses only integer-pel samples from the motion compensated prediction with the highest blending weight.

A 16th embodiment provides the method of any one of the preceding embodiments, comprising:

- obtaining a vector for the motion compensated prediction of the block,
- determining whether the vector is a fractional-pel vector or an integer-pel vector,
- if the vector is a fractional-pel vector, performing in parallel a fractional-pel motion compensation and an IPM derivation for obtaining the one or more IPMs, wherein the IPM derivation uses the one or more integer-pel location samples of the fractional-pel vector, and
- reconstructing the block using the fractional-pel motion compensation and the obtained IPMs.

A 17th embodiment provides the method of the 16th embodiment, further comprising:

- if the vector is an integer-pel vector, performing in parallel an integer-pel motion compensation and an IPM derivation for obtaining the one or more IPMs, wherein the IPM derivation uses one or more integer-pel location samples of the integer-pel vector, and
- reconstructing the block using the integer-pel motion compensation and the obtained IPMs.

An 18th embodiment provides the method of any one of the 1st to 15th embodiments, comprising:

- obtaining two or more vectors for the motion compensated prediction of the block,
- determining whether the two or more vectors are fractional-pel vectors or integer-pel vectors,
- if the two or more vectors are fractional-pel vectors, performing in parallel respective fractional-pel motion compensations for obtaining a combined motion compensated prediction and an IPM derivation for obtaining the one or more IPMs, wherein the IPM derivation uses the one or more integer-pel location samples of the two or more fractional-pel vectors, and
- reconstructing the block using the combined motion compensated prediction and the obtained IPMs.

A 19th embodiment provides the method of the 18th embodiment, further comprising:

- if the two or more vectors are integer-pel vectors, performing in parallel respective integer-pel motion compensations for obtaining the combined motion compensated prediction and an IPM derivation for obtaining the one or more IPMs, wherein the IPM derivation uses one or more integer-pel location samples of the two or more integer-pel vectors, and
- reconstructing the block using the combined motion compensated prediction and the obtained IPMs.

A 20th embodiment provides the method of any one of the 16th to 19th embodiments, wherein the IPM derivation uses an integer part of the vector to fetch the one or more integer-pel location samples of one or more reference picture

areas.

A 21st embodiment provides the method of the 20th embodiment, wherein the one or more integer-pel location samples are obtained from a decoded picture buffer (DPB).

A 22nd embodiment provides the method of any one of the preceding embodiments, wherein using the one or more integer-pel location samples of the one or more fractional-pel vectors for obtaining the one or more IPMs is decided explicitly or implicitly.

A 23rd embodiment provides the method of the 22nd embodiment, wherein using the one or more integer-pel location samples of the one or more fractional-pel vectors for obtaining the one or more IPMs is decided responsive to a signaling in a data stream, e.g., a bitstream which includes data representing the picture.

A 24th embodiment provides the method of the 23rd embodiment, wherein using the one or more integer-pel location samples of the one or more fractional-pel vectors for obtaining the one or more IPMs is indicated in the data stream per one or more of the following:

- per coding unit, CU,
- per prediction unit, PU,
- per transform unit, TU,
- per coding tree unit, CTU,
- per slice,
- per picture,
- per sequence.

A 25th embodiment provides the method of the 22nd embodiment, wherein using the one or more integer-pel location samples of the one or more fractional-pel vectors for obtaining the one or more IPMs is determined based on one or more certain criteria.

A 26th embodiment provides the method of the 25th embodiment, wherein the one or more certain criteria comprise one or more of the following:

- a prediction mode of the block,
- a motion vector precision of the block,
- a block vector precision of the block,
- a block size.

A 27th embodiment provides the method of the 26th embodiment, wherein the one or more integer-pel location samples of the one or more fractional-pel vectors are used for obtaining the one or more IPMs

- if the motion vector precision or the block vector precision of the block is at or above a precision threshold, or
- if the block size of the currently processed block is at or above a size threshold.

A 28th embodiment provides the method of the 26th embodiment or 27th embodiment, wherein the one or more integer-pel location samples of the one or more fractional-pel vectors are not used for obtaining the one or more IPMs

- if the motion vector precision or the block vector precision of the block is below the precision threshold, or
- if the block size of the currently processed block is below the size threshold.

A 29th embodiment provides the method of any one of the preceding embodiments, wherein the one or more IPMs are obtained by using a texture analysis method, e.g., by using a decoder side intra mode derivation, DIMD, process or a template-based intra mode derivation, TIMD, process.

A 30th embodiment provides the method of any one of the preceding embodiments, wherein the method comprises performing one or more of the following using the one or more obtained IPMs:

- a transform selection of the current block,
- a combined intra and inter prediction, CIIP, process,

- a coding of blocks other than current block, e.g., one or more future blocks.

A 31st embodiment provides the method of the 30th embodiment, wherein the one or more obtained IPMs are used in

- a most probable mode, MPM, of one or more future blocks, or
- coding a block in a different channel, like a co-located block in a chroma channel, through direct mode, DM, or MPM, or
- a transform selection of a block in a different channel, like a co-located block in a chroma channel.

A 32nd embodiment provides the method of the 30th embodiment or 31st embodiment, wherein the transform comprises:

- a multiple transform selection, MTS, or
- a low-frequency non-separable transform, LFNST, or
- a non-separable primary transform, NSPT, or
- any other transform coding mechanism that relies on an intra prediction direction for determining transform coding of the block.

A 33rd embodiment provides the method of any one of the preceding embodiments, wherein the motion compensation uses a full-pel precision, or a half-pel precision or a quarter-pel precision.

A 34th embodiment provides the method of any one of the preceding embodiments, wherein the one or more blocks comprise one or more inter-coded blocks, and the one or more vectors comprise one or more motion vectors.

A 35th embodiment provides the method of any one of the 1st to 33rd embodiment, wherein the one or more blocks comprise one or more non-inter-coded blocks, and the one or more vectors comprise one or more block vectors.

A 36th embodiment provides the method of the 35th embodiment, wherein the one or more non-inter-coded blocks comprises one or more Intra block copy, IBC, coded blocks or one or more intra template matching prediction, intraTMP, coded blocks.

A 37th embodiment provides a method for decoding an encoded data stream, the encoded data stream including data representing a picture, the method comprising:

decoding from the encoded data stream the picture,

wherein decoding the picture comprises processing one or more blocks according to the method of any one of the preceding embodiments for obtaining one or more intra prediction modes, IPMs.

A 38th embodiment provides a method for encoding a picture into an encoded data stream, the encoded data stream including data representing the picture, the method comprising:

receiving an original picture, and

encoding the picture into the encoded data stream,

wherein encoding the picture comprises processing one or more blocks according to the method of any one of the 1st to 36th embodiments for obtaining one or more intra prediction modes, IPMs.

A 39th embodiment provides a non-transitory computer-readable storage medium comprising instructions which, when executed by a computer, cause the computer to carry out the method of any one of the preceding embodiments.

A 40th embodiment provides an apparatus of processing one or more blocks of a picture, the apparatus comprising: an intra prediction mode, IPM, determination module configured to obtain one or more intra prediction modes, IPMs, using one or more integer-pel location samples of one or more fractional-pel vectors that are used for a motion compensated prediction of the block.

A 41st embodiment provides an apparatus for decoding an encoded data stream, the encoded data stream including

EP 4 708 850 A1

data representing a picture, the apparatus comprising:

a decoder module configured to decode from the encoded data stream the picture, and
a prediction module, the prediction module including an apparatus according to the 40th embodiment.

A 42nd embodiment provides an apparatus for encoding a picture into an encoded data stream, the encoded data stream including data representing the picture, the apparatus comprising:

an encoder module configured to receive the original picture and to encode the picture into the encoded data stream, and
a prediction module, the prediction module including an apparatus according to the 40th embodiment.

A 43rd embodiment provides a data stream having encoded thereinto a picture, wherein the data stream comprises:

an indication of integer-pel location samples of one or more fractional-pel vectors of two or more motion compensated predictions to be used for obtaining one or more intra prediction modes, IPMs, and/or
a flag, the flag indicating whether one or more integer-pel location samples of one or more fractional-pel vectors are to be used for obtaining one or more intra prediction modes, IPMs.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

**Claims**

1.  A method of processing one or more blocks of a picture, the method comprising:
    obtaining one or more intra prediction modes, IPMs, using one or more integer-pel location samples of one or more fractional-pel vectors that are used for a motion compensated prediction of the block.

2.  The method of claim 1, wherein processing the one or more blocks comprises a motion compensation using the one or more fractional-pel vectors, and wherein obtaining the one or more IPMs and the motion compensation are executed in parallel.

3.  The method of any one of the preceding claims, wherein

    the motion compensated prediction of the block is obtained using one or more motion compensated predictions from one or more reference picture areas, and the one or more IPMs are obtained using one or more of the integer-pel location samples of one, some or all of the motion compensated predictions, and
    wherein the one or more reference picture areas may comprise:

    - one or more reference frames of a current frame, the current frame including the block currently processed, or
- a current frame including the block currently processed.

4. The method of any one of the preceding claims, wherein the motion compensated prediction of the block is obtained using two or more motion compensated predictions, and the one or more IPMs are obtained using one or more of the integer-pel location samples of one or some or all of the motion compensated predictions.

5. The method of claim 7, wherein the integer-pel location samples of the two or more motion compensated predictions to be used are determined

explicitly, e.g., in a data stream, e.g., a bitstream which includes data representing the picture, or
implicitly, e.g., based on one or more of the following:

- motion information of each motion compensated prediction,
- a temporal distance or quality or type of the one or more reference picture areas used for motion compensation.

6. The method of claim 4 or 5, wherein obtaining one or more IPMs uses weights associated with the respective motion compensated predictions, e.g.,

when using a decoder side intra mode derivation, DIMD, like texture analysis mechanism, gradient values of the DIMD process for samples obtained for each integer-pel location are weighted according to blending weights of corresponding motion compensated predictions, or
when using a template-based intra mode derivation, TIMD, like mechanism, and distortion values of the TIMD process for samples obtained for each integer-pel location are weighted according to blending weights of corresponding motion compensated predictions.

7. The method of claim 4 or 5, wherein obtaining the one or more IPMs uses only integer-pel samples from the motion compensated prediction with the highest blending weight.

8. The method of any one of the preceding claims, comprising:

- obtaining a vector for the motion compensated prediction of the block,
- determining whether the vector is a fractional-pel vector or an integer-pel vector,
- if the vector is a fractional-pel vector, performing in parallel a fractional-pel motion compensation and an IPM derivation for obtaining the one or more IPMs, wherein the IPM derivation uses the one or more integer-pel location samples of the fractional-pel vector, and
- reconstructing the block using the fractional-pel motion compensation and the obtained IPMs.

9. The method of any one of claims 1 to 7, comprising:

- obtaining two or more vectors for the motion compensated prediction of the block,
- determining whether the two or more vectors are fractional-pel vectors or integer-pel vectors,
- if the two or more vectors are fractional-pel vectors, performing in parallel respective fractional-pel motion compensations for obtaining a combined motion compensated prediction and an IPM derivation for obtaining the one or more IPMs, wherein the IPM derivation uses the one or more integer-pel location samples of the two or more fractional-pel vectors, and
- reconstructing the block using the combined motion compensated prediction and the obtained IPMs.

10. The method of any one of the preceding claims, wherein using the one or more integer-pel location samples of the one or more fractional-pel vectors for obtaining the one or more IPMs is decided

explicitly, e.g., responsive to a signaling in a data stream, e.g., a bitstream which includes data representing the picture, or
implicitly, e.g., based on one or more certain criteria, like one or more of the following:

- a prediction mode of the block,
- a motion vector precision of the block,

- a block vector precision of the block,
- a block size.

**11.** The method of any one of the preceding claims, wherein the method comprises performing one or more of the following using the one or more obtained IPMs:

- a transform selection of the current block,
- a combined intra and inter prediction, CIIP, process,
- a coding of blocks other than current block, e.g., one or more future blocks.

**12.** The method of any one of the preceding claims, wherein

the one or more blocks comprise one or more inter-coded blocks, and the one or more vectors comprise one or more motion vectors, or

the one or more blocks comprise one or more non-inter-coded blocks, like one or more Intra block copy, IBC, coded blocks or one or more intra template matching prediction, intraTMP, coded blocks, and the one or more vectors comprise one or more block vectors.

**13.** A non-transitory computer-readable storage medium comprising instructions which, when executed by a computer, cause the computer to carry out the method of any one of the preceding claims.

**14.** An apparatus of processing one or more blocks of a picture, the apparatus comprising:
an intra prediction mode, IPM, determination module configured to obtain one or more intra prediction modes, IPMs, using one or more integer-pel location samples of one or more fractional-pel vectors that are used for a motion compensated prediction of the block.

**15.** A data stream having encoded thereinto a picture, wherein the data stream comprises:

an indication of integer-pel location samples of one or more fractional-pel vectors of two or more motion compensated predictions to be used for obtaining one or more intra prediction modes, IPMs, and/or
a flag, the flag indicating whether one or more integer-pel location samples of one or more fractional-pel vectors are to be used for obtaining one or more intra prediction modes, IPMs.

Fig. 1

156          158          172          160          162

152 Bit-stream → | Entropy decoder | → | Partitioning | → | Inverse Quantization | → | Inverse Transform |

108

176

174

⊕ ← 164

178

| Intra Prediction |

| Motion Compensation |

| Decoded picture buffer |

| In-loop Filters |

| Post-decoding processing | → 154

150

170

182          184          180          166          168

Fig. 2

Fig. 3

Fig. 4

**Intra prediction**

$P_{intra}$

**Inter prediction**

$P_{inter}$

Combined prediction

$P_{CIIP}$

**Block prediction**

Fig. 5

Fig. 6

Fig. 7

(A)

(B)

Fig. 8

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

Fig. 9

```
                                    ┌ 4x4  ──→ ┌─────────────┐
                                    │          │  NSPT4x4    │
                                    │          └─────────────┘
                                    │  4x8  ──→ ┌─────────────┐
                                    │          │  NSPT4x8    │
                                    │          └─────────────┘
                                    │  8x4  ──→ ┌─────────────┐
                                    │          │  NSPT8x4    │
  4xN/Nx4 ≥ 4  ─┤                   │          └─────────────┘
                                    │  4x16 ──→ ┌─────────────┐
                                    │          │  NSPT4x16   │
                                    │          └─────────────┘
                                    │  16x4 ──→ ┌─────────────┐
                                    │          │  NSPT16x4   │
                                    │          └─────────────┘
                                    └ else ──→ ┌──────────────┐
                                               │ DCT-II+LFNST4│
                                               └──────────────┘

                                    ┌ 8x8  ──→ ┌─────────────┐
                                    │          │  NSPT8x8    │
                                    │          └─────────────┘
                                    │  8x16 ──→ ┌─────────────┐
  8xN/Nx8 ≥ 8  ─┤                   │          │  NSPT8x16   │
                                    │          └─────────────┘
                                    │  16x8 ──→ ┌─────────────┐
                                    │          │  NSPT16x8   │
                                    │          └─────────────┘
                                    └ else ──→ ┌──────────────┐
                                               │ DCT-II+LFNST8│
                                               └──────────────┘

  MxN (M,N ≥ 16) ───────────────→ ┌───────────────┐
                                   │ DCT-II+LFNST16│
                                   └───────────────┘
```

Fig. 10

Fig. 11

Fig. 12

Fig. 13

Fig. 14  Reference frame                    Current frame

Reference frame #1          Current frame          Reference frame #2
Fig. 15

Current frame

Fig. 16

Current frame

Fig. 17

obtaining one or more intra prediction modes, IPMs, using one or more integer-pel location samples of one or more fractional-pel vectors that are used for a motion compensated prediction of the block

S200

Fig. 18

Fig. 19

Reference picture

Fractional-pel reference
block boundary

Integer-pel reference
block boundary

integer pixels:
used for IPM derivation

fractional pixels:
motion compensated
pixels

Fig. 20

S300

S302

Get MV for a block

S304

S308

Frac -pel MV

MV    NO          YES    $MV = MV_{int} + MV_{frac}$

Executed in parallel

Integer-pel motion compensation

Derive IPM from integer-pel samples

Fractional-pel motion compensation

Derive IPM from integer-pel samples with $MV_{int}$

Executed in parallel

S308a

S304b

Block reconstruction

Block reconstruction

S310    S308b    S304a    S306

Fig. 21

S402 — Get MVs for a block — S400

S408

S408b

S404

NO — Frac-pel MVs — YES

$MV_2$

$MV_1$

$MV_1 = MV_{int1} + MV_{frac1}$

$MV_2 = MV_{int2} + MV_{frac2}$

Integer-pel MC 2

Derive IPM from integer-pel samples with $MV_1$ and $MV_2$

Integer-pel MC 1

Fractional-pel MC 1

Derive IPM from integer-pel samples with $MV_{int1}$ and $MV_{int2}$

Fractional-pel MC 2

Executed in parallel

S404b

Combined MC prediction

Combined MC prediction

S408d

S408c

Executed in parallel

Block reconstruction

S408a

S404a

Block reconstruction

S404c

S404d

S410

S406

Fig. 22

Decoding from the encoded data stream the picture — S500

Obtaining one or more intra prediction modes, IPMs, using one or more integer-pel location samples of one or more fractional-pel vectors that are used for a motion compensated prediction of the block — S502

Fig. 23

Receiving an original picture — S600

Encoding the picture into an encoded data stream — S602

Obtaining one or more intra prediction modes, IPMs, using one or more integer-pel location samples of one or more fractional-pel vectors that are used for a motion compensated prediction of the block — S602a

Including into the data stream an indication which integer-pel location samples to use from different vectors for obtaining the IPM(s) and/or a flag for indicating whether or not the one or more integer-pel location samples are to be used for obtaining the IPM(s) — S604

Fig. 24

IPM determination module

402

400

Fig. 25

Decoder module

502

Prediction module

504

500

Fig. 26

Fig. 27

Fig. 28

Fig. 29

Europäisches
Patentamt

European
Patent Office

Office européen
des brevets

## EUROPEAN SEARCH REPORT

**Application Number**

EP 24 31 5414

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16) , no. JVET-AH2025 ; m68146 26 June 2024 (2024-06-26), XP030319932, Retrieved from the Internet: URL:https://jvet-experts.org/doc_end_user/documents/34_Rennes/wg11/JVET-AH2025-v1.zi p JVET-AH2025-v1.docx [retrieved on 2024-06-26] * pages 14-16, paragraph 3.1.8 - paragraph 3.1.10.2 * * pages 36-39, paragraph 3.2.5 - paragraph 3.2.6.4 * * pages 48-50, paragraph 3.2.16 * ----- | 1-15 | INV. H04N19/105 H04N19/11 H04N19/176 H04N19/523 H04N19/593 H04N19/573 H04N19/577 |
| Y | UEDA M ET AL: "TE1: Refinement Motion Compensation using Decoder-side Motion Estimation", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SIT E/, no. JCTVC-B032; JCTVC-B032, 18 July 2010 (2010-07-18), XP030007612, * the whole document * ----- -/-- | 1-15 | TECHNICAL FIELDS SEARCHED (IPC)<br><br>H04N |

The present search report has been drawn up for all claims

| Place of search | Date of completion of the search | Examiner |
|---|---|---|
| Munich | 4 February 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| Europäisches Patentamt European Patent Office Office européen des brevets | **EUROPEAN SEARCH REPORT** | Application Number EP 24 31 5414 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG (QUALCOMM) K ET AL: "Intra-prediction Mode Propagation for Inter-pictures", 10. JVET MEETING; 20180410 - 20180420; SAN DIEGO; (THE JOINT VIDEO EXPLORATION TEAM OF ISO/IEC JTC1/SC29/WG11 AND ITU-T SG.16) , no. JVET-J0053 14 April 2018 (2018-04-14), XP030248245, Retrieved from the Internet: URL:http://phenix.int-evry.fr/jvet/doc_end _user/documents/10_San%20Diego/wg11/JVET-J 0053-v2.zip JVET-J0053.docx [retrieved on 2018-04-14] * the whole document * | 1-15 | |
| A | KIDANI (KDDI) Y ET AL: "Non-EE2: Bi-predictive IBC for natural and screen content", 30. JVET MEETING; 20230421 - 20230428; ANTALYA; (THE JOINT VIDEO EXPLORATION TEAM OF ISO/IEC JTC1/SC29/WG11 AND ITU-T SG.16) , no. JVET-AD0134 ; m62779 22 April 2023 (2023-04-22), XP030308813, Retrieved from the Internet: URL:https://jvet-experts.org/doc_end_user/ documents/30_Antalya/wg11/JVET-AD0134-v3.z ip JVET-AD0134-v3_clean.docx [retrieved on 2023-04-22] * the whole document * | 1-15 | TECHNICAL FIELDS SEARCHED (IPC) |

The present search report has been drawn up for all claims

| Place of search | Date of completion of the search | Examiner |
|---|---|---|
| Munich | 4 February 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)